(19) Europäisches Patentamt / European Patent Office / Office européen des brevets

(11) **EP 2 574 053 A1**

(12) **EUROPEAN PATENT APPLICATION**
published in accordance with Art. 153(4) EPC

(43) Date of publication:
**27.03.2013 Bulletin 2013/13**

(21) Application number: **12776603.8**

(22) Date of filing: **18.04.2012**

(51) Int Cl.:
**H04N 7/173** (2011.01)    **H04N 7/26** (2006.01)
**H04N 13/00** (2006.01)

(86) International application number:
**PCT/JP2012/060516**

(87) International publication number:
**WO 2012/147596 (01.11.2012 Gazette 2012/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2011   JP 2011102370**

(71) Applicant: **Sony Corporation
Tokyo 108-0075 (JP)**

(72) Inventor: **TSUKAGOSHI, Ikuo
Tokyo 108-0075 (JP)**

(74) Representative: **Ealey, Douglas Ralph
D Young & Co LLP
120 Holborn
London EC1N 2DY (GB)**

(54) **IMAGE DATA TRANSMISSION DEVICE, IMAGE DATA TRANSMISSION METHOD, IMAGE DATA RECEPTION DEVICE, AND IMAGE DATA RECEPTION METHOD**

(57)    In a receiving side, to make it possible to correctly respond to a change in configuration of elementary streams. Stream association information indicating an association between each of the elementary streams (ES) included in a transport stream (TS) is inserted in the ES. The stream association information indicates the association between a first ES containing first image data and a predetermined number of second ESs respectively containing a predetermined number of second image data and/or metadata associated with the first image data. The stream association information indicates the association between each of the ESs, for example, using identifiers for respectively identifying the ESs. For example, a descriptor is inserted in the TS in which the descriptor indicates a correspondence between each of the identifiers of the ESs and each of packet identifiers or component tags of the respective ESs, so that a link between a registration state in a TS layer of each ES and the stream association information is achieved.

*FIG. 5*

Transport Stream Association Mechanism

EP 2 574 053 A1

**Description**

TECHNICAL FIELD

The present technology relates to an image data transmitting device, an image data transmitting method, an image data receiving device, and an image data receiving method, and more particularly to an image data transmitting device which transmits stereoscopic image data, scalable encoded image data, and the like.

BACKGROUND ART

In the related art, H.264/AVC (Advanced Video Coding) is known as a video coding system (refer to Non-patent Document 1). In addition, H.264/MVC (Multi-view Video Coding) is known as an extension system of H.264/AVC (refer to Non-patent Document 2). The MVC employs a scheme of collectively encoding multi-view image data. In the MVC, multi-view image data is encoded into image data of a base view, and image data of one or more non-base views.

In addition, H.264/SVC (Scalable Video Coding) is also known, as an extension system of H.264/AVC (refer to Non-patent Document 3). The SVC is a technology which hierarchically encodes an image. In the SVC, video is divided into a basic layer (lowest layer) having image data required for decoding the video in minimum quality, and an extension layer (upper layer) having image data for improving the quality of the video by being added to the basic layer.

CITATION LIST

NON-PATENT DOCUMENTS

Non-Patent Document 1 : "Draft Errata List with Revision-Marked Corrections for H.264/AVC", JVT-1050, Thomas Wiegand et. al., Joint Video Team (JVT) of ISO/IEC MPEG & ITU-T VCEG, 2003 Non-patent Document 2: Joint Draft 4.0 on Multiview Video Coding, Joint Video Team of ISO/IEC MPEG & ITU-T VCEG, JVT-X209, July 2007 Non-patent Document 3: Heiko Schwarz, Detlev Marpe, and Thomas Wiegand, "Overview of the Scalable Video Coding Extension of the H.264/AVC, Standard", IEEE TRANSACTIONS ON CIRCUITS AND SYSTEMS FOR VIDEO TECHNOLOGY, VOL.17, NO.9, SEPTEMBER 2007, pp.1103-1120

SUMMARY OF THE INVENTION

PROBLEMS TO BE SOLVED BY THE INVENTION

In a distribution environment where an AVC stream and an MVC stream are dynamically switched, a receiver for MVC is expected to switch between its reception modes by determining whether there is only a stream of "Stream_Type=0x1B" or there are both streams of "Stream_Type=0x1B" and "Stream_Type=0x20".

The usual AVC (2D) video elementary stream is sent by "Stream_Type=0x1B" of PMT (Program Map Table). Alternatively, in some cases, the video elementary stream of a base view of MVC (called Base view sub-bitstream) may be sent by "Stream_Type=0x1B" of PMT. As for the MVC, in some cases, image data of a base view and image data of a non-base view are collectively sent. That is, in a case where the image data of a base view and the image data of a non-base view are separately sent, the video elementary stream of a base view of MVC (called Base view sub-bitstream) may be sent by "Stream_Type=0x1B" of PMT.

A section in a transport stream is provided with a structure to distinguish whether the transport stream is an AVC stream or an MVC stream on the level of PMT which serves as PSI (Program Specific Information). That is, it is possible to recognize that a video elementary stream is a 2DAVC stream when there is only "Stream_Type=0x1B." That is, it is possible to recognize that a video elementary stream is an MVC stream when there are both of "Stream_Type=0x1B" and "Stream_Type=0x20."

However, the PMT may not necessarily be dynamically updated depending on transmitting side equipment. In that case, the following inconveniences are considered to arise when the distribution contents is switched from a stereoscopic (3D) image to a two-dimensional (2D) image. That is, it is considered that the receiver continuously waits for data, assuming that a stream of a stream type (Stream_Type) "0x20" will be delivered subsequently to an elementary stream of a stream type (Stream_Type) "0x1B."

After the distribution contents have switched to a two-dimensional (2D) image, although the elementary stream of "0x20" would not be received, the inside of the receiver continuously waits for the elementary stream of "0x20" assuming that the elementary stream of "0x20" will be delivered. As a result, right decoding cannot be achieved, so there is a concern that a normal display may not be obtained. That is, in a case where a receiver counts on only the kind of "Stream_type" of PMT to determine its mode, there is a possibility that the determined mode may not be correct and, as a result, a right stream may not be received.

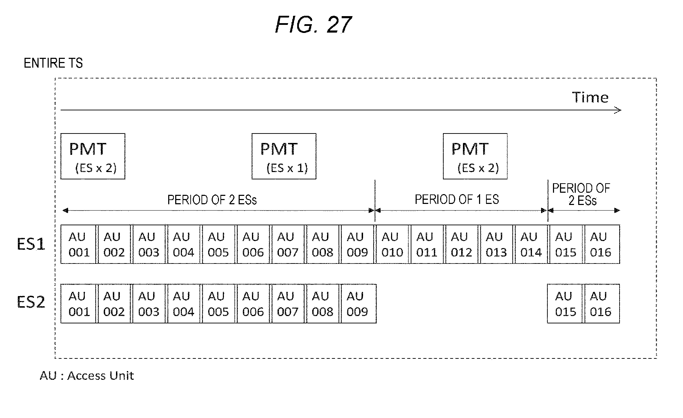

Fig. 27 illustrates a configuration example of a video elementary stream and a PMT (Program Map Table) in a transport stream. In the period of Access Units (AU) "001" through "009" of video elementary streams ES1 and ES2, two video elementary streams exist. This period is a main period of a 3D program, for example, and these two streams make up a stream of stereoscopic (3D) image data.

In the period of Access Units "010" through "014" of the video elementary stream ES1 which is subsequent to the previously mentioned period, only one video elementary stream exists. This period is a CM period, for example, to be inserted in the main period of the 3D program, and the one stream makes up a stream of two-dimensional image data.

Moreover, in the period of Access Units "0015" through "016" of the video elementary streams ES1 and ES2 which is subsequent to the lastly mentioned period, two video elementary streams exist. This period is a main period of a 3D program, for example, and these two streams make up a stream of stereoscopic (3D) image data.

In the PMT, a cycle (for example, 100 msec) of updating registration of the video elementary streams cannot match the frame period (for example, 33.3 msec) of video. In the method of recognizing a dynamic change in the elementary stream which makes up a transport stream with the PMT, the inside configurations of the elementary stream and the transport stream of PMT are asynchronous. Accordingly, such a method cannot guarantee a right operation in a receiver.

In the existing signal standard (MPEG), it is indispensable to insert the descriptor "MVC_extension descriptor" into the video elementary stream of a MVC base view (called Base view sub-bitstream) of "Stream_Type=0x1B" as a PMT descriptor. Existence of this descriptor tells existence of the video elementary stream of a non-base view (non-base view sub-bitstream).

However, the video elementary stream of "Elementary PID" indicated by "Stream_Type=0x1B" is not necessarily a video elementary stream of an MVC base view (called Base view sub-bitstream) mentioned above. In the conventional AVC, it is considered that there are many high profile streams. Especially, in order to guarantee compatibility with the existing 2D receivers, in some cases, it is recommended that, even though there is stereoscopic (3D) image data, the video elementary stream of a base view is converted into a video elementary stream of the conventional AVC (2D).

In this case, a stream of stereoscopic image data includes a video elementary stream of AVC (2D), and a video elementary stream of a non-base view (Non-Base view sub-bitstream). In this case, the descriptor of "MVC_extension descriptor" is not associated with the video elementary stream of "Stream_Type=0x1B." Therefore, there is no way of recognizing existence of the video elementary stream of a non-base view (non-base view sub-bitstream), aside from existence of the AVC (2D) video elementary stream corresponding to a video elementary stream of a base view.

In addition, as described above, in a distribution environment where an AVC (2D) stream and a MVC stream are dynamically switched, a receiver for MVC is expected to switch between its reception modes by determining whether there is only a stream of "Stream_Type=0x1B" or there are both streams of "Stream_Type=0x1B" and "Stream_Type=0x20". The usual AVC (2D) video elementary stream is sent by "Stream_Type=0x1B" of PMT (Program Map Table). Alternatively, in some cases, the video elementary stream of a base view (Base view) of MVC (called Base view sub-bitstream) may be sent by "Stream_Type=0x1B" of PMT.

In that case, a plurality of video elementary streams can be multiplexed into one transport stream (TS: Tranport Stream). There are cases where the stream of stereoscopic image data is formed of some of the video elementary streams among them. For example, a case where the video streams described below are multiplexed into one transport stream is considered.

```
      PID0 (AVC 2D) stream_type = 0x1B


    PID1 (AVC 3D Frame Compatible) stream_type = 0x1B


      PID2 (MVC non-base substream) stream_type = 0x20
```

The video elementary stream of "PID0" itself is a stream of conventional two-dimensional (2D) image data. This video elementary stream makes up a stream of stereoscopic (3D) image data by combining with a video elementary stream of a non-base view (Non-Base view sub-bitstream) of "PID2." However, the video streams as components of 3D cannot be associated only with use of "stream_type". That is, it is because "stream_type=0x1B" is also applicable to the video elementary stream of "PID1." "AVC 3D Frame Compatible" represents stereoscopic (3D) image data of, for example, a side-by-side system, a top-and-bottom system, and the like.

The above description is in connection with an example where both of an encoding system of image data of a base view and an encoding system of image data of a non-base view are MPEG4-AVC. However, the following cases also may be considered: a case where both of the encoding system of image data of a base view and the encoding system of image data of a non-base view are MPEG2 video system or the like which is other than the above-described encoding system; and a case where the encoding system of image data of a base view and the encoding system of image data of a non-base view are different from each other.

Furthermore, in the above description, the followings have been pointed out: it is difficult to determine whether an elementary stream contained in a transport stream makes up stereoscopic (3D) image data; and it is difficult to identify which elementary stream, among elementary streams contained in a transport stream, makes up stereoscopic (3D) image data. Although detailed description is not given, such an inconvenience arises even when an AVC stream and the above-described SVC stream are transmitted in a time sharing manner.

An object of the present technology is to allow, for example, a receiver for MVC or SVC to correctly respond to dynamic alterations in distribution contents and to perform a right stream reception.

SOLUTION TO PROBLEMS

A concept of the present technology is an image data transmitting device including:

an encoding unit that generates a first elementary stream containing first image data and a predetermined number of second elementary streams that respectively contain a predetermined number of second image data and/or metadata associated with the first image data; and
a transmitting unit that transmits a transport stream including each of packets obtained by packetizing each of the elementary streams generated by the encoding unit,
wherein the encoding unit inserts stream association information that indicates an association between the elementary streams into at least the first elementary stream.

In the present technology, the first elementary stream containing the first image data, and the predetermined number of second elementary streams that respectively contain the predetermined number of second image data and/or metadata associated with the first image data are generated by the encoding unit. Therefore, the transport stream which includes each of the packets obtained by packetizing each of the elementary streams generated by the encoding unit is transmitted by the transmitting unit. In this case, there may be following states: a state where only the predetermined number of second image data exist; a state where only the predetermined number of metadata exist; and a state where the second image data and the metadata coexist in the predetermined number in total.

For example, as an encoding system of the first image data contained in the first elementary stream, and an encoding system of the second image data contained in the predetermined number of second elementary streams, an arbitrary combination of encoding systems is acceptable. For example, a case where only MPEG4-AVC is used as the encoding systems, a case where only MPEG2 video is used as the encoding systems, and furthermore a case where a combination of those encoding systems is used are considered. The encoding systems are not limited to MPEG4-AVCs and MPEG2 video.

For example, the first image data is image data of a base view which makes up stereoscopic (3D) image data, and the second image data is image data of a view (non-base view) other than the base view which makes up the stereoscopic image (3D) data. In this case, for example, the first image data is image data for any one of a left eye and a right eye for obtaining a stereo stereoscopic image, and the second image data is image data for the other one of the left eye and the right eye for obtaining the stereo stereoscopic image.

In addition, for example, the metadata is parallax information (parallax vector, depth data, etc.) corresponding to the stereoscopic image data. For example, in a receiving side, an interpolation process (post process) is performed on received image data using the parallax information, so that display image data of a predetermined number of views can be obtained. In addition, for example, the first image data is encoded image data of the lowest layer which makes up scalable encoded image data, and the second image data is encoded image data of layers other than the lowest layer which makes up the scalable encoded image data.

For example, the stream association information may be configured to include position information which indicates, as which view, the view corresponding to the image data contained in the elementary stream, in which the stream association information has been inserted, is displayed during stereoscopic display under multi-viewing.

The stream association information which indicates an association between each of the elementary streams is inserted at least in the first elementary stream by the encoding unit. For example, the stream association information is configured to indicate the association between the respective elementary streams using identifiers for identifying the respective elementary streams.

For example, a descriptor (descriptor) that indicates a correspondence between the identifier of each elementary stream and a packet identifier or a component tag of each elementary stream is inserted in the transport stream. For example, the descriptor is inserted under a program map table. In addition, the correspondence may be defined beforehand. By this, an association between a registration state in a transport stream layer of each elementary stream and the stream association information is recognized.

In this way, in the present technology, the stream association information which indicates the association between the respective elementary streams is inserted at least in the first elementary stream. Therefore, in the receiving side, it is possible to easily determine whether the second elementary stream associated with the first elementary stream is contained in the transport stream, based on the stream association information. Moreover, because the stream association information is inserted in the elementary stream itself, in the receiving side, it is possible to correctly respond, based on the stream association information, to a change in configuration of the elementary streams, i.e., a dynamic alteration in distribution contents, and to perform a right stream reception.

In addition, in the present technology, the stream association information may be configured to include previous announcement information which announces occurrence of a change in the association between the elementary streams before the change actually occurs. Based on the previous announcement information, in the receiving side, it is possible to efficiently, dynamically change control of reading of decoder buffers.

In the present technology, for example, the encoding unit may be configured to insert the stream association information in the elementary stream on picture basis or GOP basis. With such a configuration, in the receiving side, it is possible to manage the configuration of the elementary streams, for example, the change in the number of views of stereoscopic image data or the change in the number of layers of the scalable encoded image data, on picture basis or GOP basis.

Furthermore, in the present technology, the receiving unit may be configured to insert, into the transport stream, the descriptor which indicates whether or not the stream association information has been inserted in the elementary stream, or whether there is a change in the stream association information inserted in the elementary stream. Because of the descriptor, it is possible to prompt to make reference to the stream association information inserted in the elementary stream, and a stable receiving operation can be performed in the receiving side.

In addition, in the present technology, for example, the stream association information may be configured to further include control information on output resolutions of the first image data and the second image data. With this configuration, in the receiving side, it is possible to adjust the output resolutions of the first image data and the second image data so as to match predetermined resolutions, based on the control information.

In addition, in the present technology, for example, the stream association information may be configured to further include control information which specifies whether each of the predetermined number of second image data should be necessarily displayed. With this configuration, in the receiving side, it is possible to recognize which data out of a predetermined number of second image data should be necessarily displayed, based on the control information, and it is possible to restrict user's selection of an image display state.

Moreover, another concept of the present technology is an image data receiving device including: a receiving unit that receives a transport stream containing each of packets obtained by packetizing a first elementary stream, which contains first image data, and a predetermined number of second elementary streams, which respectively contain a predetermined number of second image data and/or metadata associated with the first image data, stream association information that indicates an association between each of the elementary streams being inserted in the first elementary stream; and further including a data acquiring unit that acquires, based on the stream association information, the first image data from the first elementary stream received by the receiving unit, and the second image data and/or metadata associated with the first image data from the predetermined number of second elementary streams received by the receiving unit.

In the present technology, the transport stream may be received by the receiving unit. The transport stream may include each of the packets obtained by packetizing the first elementary stream containing the first image data and the predetermined number of second elementary streams respectively containing the predetermined number of second image data and/or metadata associated with the first image data. In this case, the stream association information which indicates the association between each of the elementary streams has been inserted in the first elementary stream.

The image data and/or metadata are acquired by the data acquiring unit from the transport stream received by the receiving unit. In this case, based on the stream association information, the first image data is acquired from the first elementary stream, and furthermore the second image data and/or metadata are acquired from the predetermined number of second elementary streams.

In the present technology, the stream association information which indicates the association between each of the elementary streams has been inserted in the transport stream. Therefore, based on the stream association information, it is possible to easily determine whether the second elementary stream associated with the first elementary stream is contained in the transport stream. Moreover, because the stream association information has been inserted in the elementary stream itself, based on the stream association information, it is possible to correctly respond to a change in configuration of the elementary streams, i.e., a dynamic alteration in distribution contents, and to achieve a right stream reception.

In the present technology, for example, a resolution adjuster may be further included which adjusts and outputs resolutions of the first image data and the second image data acquired by the data acquiring unit. Furthermore, the stream association information may contain control information on output resolutions of the first image data and the second image data, and the resolution adjuster may adjust the resolutions of the first image and the second image based on the control information on the output resolutions. In this case, even in a case where the resolution of the first image data and the resolution of the predetermined number of second image data differ from each other, the output resolutions may be matched by the resolution adjuster.

In addition, in the present technology, for example, an image display state selecting unit may be further included which selects an image display state based on the first image data and the second image data acquired by the acquiring unit, the stream association information may contain control information which specifies whether each data of the predetermined number of second image data should be necessarily displayed, and the image display state selecting unit may restrict selection of the image display state based on the control information.

In addition, in the present technology, for example, the metadata acquired by the data acquiring unit may be parallax information corresponding to stereoscopic image data, and a post processing unit may be further included which performs an interpolation process on the first image data and the second image data acquired by the data acquiring unit using the parallax information to obtain display image data of a predetermined number of views.

EFFECTS OF THE INVENTION

According to the present technology, in a receiving side, it is possible to correctly respond to a change in configuration of elementary streams, i.e., a dynamic alteration in distribution contents, and to perform stream reception satisfactorily.

BRIEF DESCRIPTION OF DRAWINGS

Fig. 1 is a block diagram illustrating a configuration example of an image transmitting/receiving system as a first embodiment of the invention.

Fig. 2 is a diagram illustrating an example where a program is formed of two video elementary streams.

Fig. 3 is a block diagram illustrating a configuration example of a transmission data generating unit in a broadcasting station which makes up an image transmitting/receiving system.

Fig. 4 is a diagram illustrating a configuration example of a general transport stream containing a video elementary stream, a graphics elementary stream, an audio elementary stream, and the like.

Fig. 5 is a diagram illustrating a configuration example of a transport stream in the case of inserting stream association information into an elementary stream and inserting an ES_ID descriptor and an ES_association descriptor in a transport stream.

Fig. 6 is a diagram illustrating a structural example (Syntax) of an ES_ID descriptor.

Fig. 7 is a diagram illustrating a structural example (Syntax) of an ES_ID descriptor.

Fig. 8 is a diagram illustrating an example of a relation between stream association information inserted in an elementary stream, and an ES_association descriptor inserted in a transport stream.

Fig. 9 is a diagram to describe that stream association information is inserted in a portion "SELs" of an access unit when an encoding system is MPEG4-AVC.

Fig. 10 is a diagram illustrating a structural example (Syntax) of "Stream Association Information SEI message" and "userdata_for_stream_association()."

Fig. 11 is a diagram illustrating a structural example (Syntax) of "user_data()."

Fig. 12 is a diagram illustrating a structural example (Syntax) of the stream association information "stream_association()."

Fig. 13 is a diagram illustrating the contents (Semantics) of each information in the structural example (Syntax) of the stream association information "stream_association()."

Fig. 14 is a diagram illustrating an example of a case where a transport stream includes a stream of a base view of MVC and a stream of a non-base view of MVC.

Fig. 15 is a diagram illustrating a view display example at the time of performing a stereoscopic (3D) display in a receiving side.

Fig. 16 is a diagram illustrating an example of insertion of "indication_of_selected_stream_display."

Fig. 17 is a block diagram illustrating a configuration example of a receiver which makes up an image transmitting/receiving system.

Fig. 18 is a diagram illustrating an example of a case where a transport stream TS includes a stream ES1 of a base view of MVC and a stream ES2 of a non-base view of MVC.

Fig. 19 is a diagram illustrating an example of a case where a transport stream TS includes MPEG2 video streams ES1 and ES2.

Fig. 20 is a diagram illustrating an example of a case where a transport stream TS includes an MPEG2 video stream ES1 and an AVC stream ES2.

Fig. 21 is a diagram illustrating another example of a case where a transport stream TS includes a stream ES1 of a base view of MVC and a stream ES2 of a non-base view of MVC.

Fig. 22 is a diagram illustrating still another example of a case where a transport stream TS includes a stream ES1 of a base view of MVC and a stream ES2 of a non-base view of MVC.

Fig. 23 is a diagram illustrating an example of a case where a transport stream TS includes a stream ES1 of a base view of MVC and streams ES2 and ES3 of non-base views of MVC.

Fig. 24 is a diagram illustrating another example of a case where a transport stream TS includes a stream ES1 of a base view of MVC and streams ES2 and ES3 of non-base views of MVC.

Fig. 25 is a diagram illustrating an example of a case where a transport stream TS includes a stream ES1 of a base view of MVC, a stream ES2 of a non-base view of MVC, and a stream ES3 of metadata.

Fig. 26 is a block diagram illustrating another configuration example of a receiver which makes up an image transmitting/receiving system.

Fig. 27 is a diagram illustrating a configuration example of a video elementary stream and a PMT (Program Map Table) in a transport stream.

MODE FOR CARRYING OUT THE INVENTION

Hereinafter, modes for embodying the present technology (hereafter, referred to as embodiments) are described. The description is made in the following order.

1. Embodiment
2. Modification

<1. Embodiment>

[Image Transmitting/Receiving System]

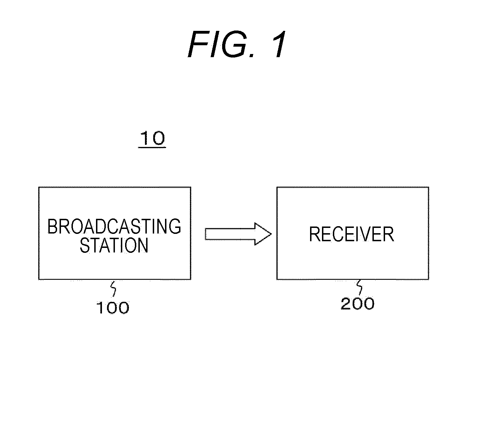

Fig. 1 illustrates a configuration example of an image transmitting/receiving system 10 as an embodiment. This image transmitting/receiving system 10 includes a broadcasting station 100 and a receiver 200. The broadcasting station 100 puts a transport stream on a broadcast wave, and transmits them. The transport stream contains image data and metadata which make up a program.

That is, the transport stream includes each of packets obtained by packetizing a first elementary stream and a predetermined number of second elementary streams, where the first elementary stream contains first image data, and each of the second elementary streams contains second image data and/or metadata associated with the first image data. This packet is a PES (Packetized Elementary Stream) packet.

In this case, there may be following states: a state where only the predetermined number of second image data exist; a state where only the predetermined number of metadata exist, and a state where the second image data and the metadata coexist in the predetermined number in total. Moreover, the predetermined number includes 0. In that case, the second image data and/or metadata associated with the first image data does not exist and the transport stream has only the packet obtained by packetizing the first elementary stream containing the first image data.

When only the first elementary stream containing the first image data exists, the first image data makes up two-dimensional (2D) image data. On the other hand, when one or a plurality of second elementary streams which contains the second image data exists in addition to the first elementary stream containing the first image data, the first image data and the predetermined number of second image data make up stereoscopic (3D) image data. Here, the first image data is image data of a base view, and the predetermined number of second image data make up image data of non-base views.

In the case of stereoscopic (3D) image data, there is only one piece of image data of a non-base view in the stereoscopic image data. That is, the predetermined number is 1. In this case, the image data of a base view is the image data for either one of a left eye and a right eye, and the image data of a non-base view is the image data for the other one of the left eye and the right eye.

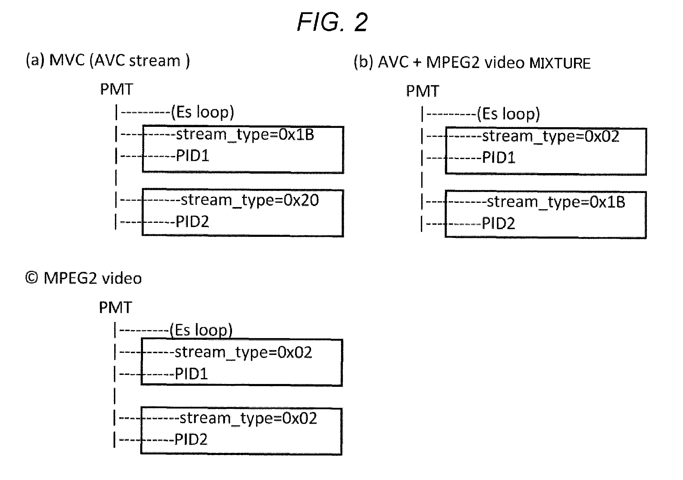

Fig. 2 illustrates an example where a program is formed of two video elementary streams, for example. In Fig. 2(a), the program is formed of a stream of a base view of MVC sent by "Stream_Type=0x1B" of PMT, and a stream of a non-base view of MVC sent by "Stream_Type=0x20" of PMT. In addition, in Fig. 2(b), the program is formed of an MPEG2 video stream sent by "Stream_Type=0x20" of PMT, and an AVC stream sent by "Stream_Type=0x1B" of PMT. Furthermore, in Fig. 2(c), the program is formed of two MPEG2 video streams sent by "Stream_Type=0x20" of PMT.

Stream association information which indicates an association between each of the elementary streams is inserted at least in the first elementary stream. This stream association information is inserted on picture basis or on GOP (Group of Picture) basis which is a display access unit containing a prediction image. The details of the stream association information are given below.

The receiver 200 receives the transport stream carried on the broadcast wave from the broadcasting station 100. As described above, the transport stream includes each of packets obtained by packetizing each of the first elementary stream and the predetermined number of second elementary streams. The first elementary stream contains the first image data. The predetermined number of second elementary streams contains the predetermined number of second image data and/or metadata associated with the first image data.

The stream association information which indicates an association between each of the elementary streams is inserted at least in the first elementary stream. Based on the stream association information, the receiver 200 acquires the first image data from the first elementary stream, and acquires the image data and/or metadata from the predetermined number of second elementary streams.

"Example of Configuration of Transmission Data Generating Unit"

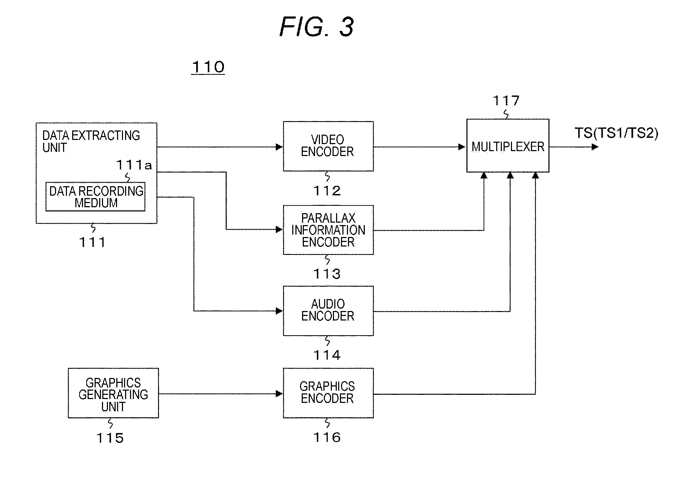

Fig. 3 illustrates a configuration example of a transmission data generating unit 110 which generates the above-described transport stream in the broadcasting station 100. The transmission data generating unit 110 includes a data extracting unit (archive unit) 111, a video encoder 112, a parallax information encoder 113, and an audio encoder 114. The transmission data generating unit 110 further includes a graphics generating unit 115, a graphics encoder 116, and a multiplexer 117.

In the data extracting unit 111, a data recording medium 111a is mounted in a detachable manner. The image data of a program to be transmitted, and audio data corresponding to the image data are recorded in the data recording medium 111a. For example, the image data switches to stereoscopic (3D) image data or two-dimensional (2D) image data depending on the program. For example, even within a single program, the image data switches to the stereoscopic picture data or the two-dimensional image data depending on the contents of the main part of the program and commercials. The stereoscopic image data includes image data of a base view, and image data of a predetermined non-base views as described above.

When the image data is stereoscopic image data, parallax information is also recorded in the data recording medium 111a so as to correspond to the stereoscopic image data. The parallax information is a parallax vector which indicates parallax between the base view and each of the non-base views, or depth data. The depth data can be treated like a parallax vector through a predetermined conversion. The parallax information is, for example, parallax information on pixel (pixel) basis, parallax information on divided area basis obtained by dividing a view (image) into a predetermined number of areas, or the like.

In the receiving side, the parallax information is used, for example, to adjust the position of the same to-be-superimposed information (graphics information and the like) to be superimposed on each of the image of a base view and the image of each of non-base views, thereby to impart parallax. Furthermore, in the receiving side, the parallax information is used, for example, to perform an interpolation process (post process) on the image data of a base view and the image data of each non-base views, thereby to obtain display image data of a predetermined number of views. The data recording medium 111a is a disk-shaped recording medium, a semiconductor memory, or the like. The data extracting unit 111 extracts image data, voice data, parallax information, and the like from the data recording medium 111a, and outputs them.

The video encoder 112 performs an encoding process such as MPEG4-AVC (MVC), MPEG2 video, etc. on the image data output from the data extracting unit 111, thereby to obtain encoded video data. The video encoder 112 generates a video elementary stream using a stream formatter (not shown) provided at the last stage.

That is, the video encoder 112 generates a video elementary stream containing two-dimensional image data (first image data) when the image data is two-dimensional image data. The video encoder 112 generates a video elementary stream containing image data (first image data) of a base view and a video elementary stream containing image data (second image data) of a predetermined number of non-base views when the image data is stereoscopic image data.

The video encoder 112 inserts the stream association information at least into the video elementary stream (first elementary stream) containing the first image data. The stream association information is information which indicates the association between each of elementary streams. The second elementary stream contains the second image data and/or metadata. The video encoder 112 inserts the stream association information on picture basis or on GOP (Group of Picture) basis which is a display access unit containing a prediction image.

The audio encoder 114 performs an encoding process such as MPEG2 Audio AAC, etc. on the voice data output from the data extracting unit 111, thereby to generate an elementary stream of audio.

The parallax information encoder 113 performs a predetermined encoding process on the parallax information output from the data extracting unit 111, thereby to generate an elementary stream of parallax information. The parallax information can be treated like pixel data when the parallax information is parallax information on pixel basis as described above. In this case, the parallax information encoder 113 performs an encoding process on the parallax information using a certain encoding system which is the same as the encoding system used for encoding the image data, and therefore can generate a parallax information elementary stream. In addition, in this case, a configuration is considered which encodes the parallax information output from the data extracting unit 111 with the video encoder 112, in which case the parallax information encoder 113 is unnecessary.

The graphics generating unit 115 generates data (graphics data) of graphics information (including subtitle information) to be superimposed on the image. The graphics encoder 116 generates a graphics elementary stream containing the graphics data generated by the graphics generating unit 115. Here, the graphics information makes up the to-be-superimposed information.

The graphics information is a logo or the like, for example. The subtitle information is a subtitle, for example. The graphics data is bit map data. Idling offset information which indicates the superimposed position on an image is added to the graphics data. The idling offset information represents perpendicular and horizontal offset values between the upper left datum point of the image and the upper left pixel of the superimposed position of the graphics information, for example. The standard for a method of transmitting subtitle data as bit map data is standardized and operated as "DVB_Subtitling" in DVB which is a digital broadcasting format of Europe.

The multiplexer 117 packetizes each of the elementary streams generated by the video encoder 112, the parallax information encoder 113, the audio encoder 114, and the graphics encoder 116, and multiplexes them to generate a transport stream TS.

Operation of the transmission data generating unit 110 illustrated in Fig. 3 is described briefly. The image data (stereoscopic image data or two-dimensional image data) output from the data extracting unit 111 is supplied to the video encoder 112. In the video encoder 112, an encoding process, such as MPEG4-AVC (MVC) and MPEG2 video, is performed on the image data to generate the video elementary stream containing the encoded video data. The video elementary stream is supplied to the multiplexer 117.

That is, in the video encoder 112, a video elementary stream containing two-dimensional image data (first image data) is generated when the image data is two-dimensional image data. In addition, in the video encoder 112, when the image data is stereoscopic (3D) image data, a video elementary stream containing image data (first image data) of a base view and a video elementary stream containing image data (second image data) of a predetermined number of non-base views are generated.

In the video encoder 112, the stream association information is inserted at least into the video elementary stream (first video elementary stream) containing the first image data on picture basis or GOP basis which is a display access unit containing a prediction image. By this, the information which indicates existence of the second elementary stream in which the second image data is contained will be transmitted to the receiving side by using the first elementary stream in which the first image data is contained.

In addition, when the stereoscopic image data is output from the data extracting unit 111, the parallax information corresponding to the stereoscopic image data is also output from the data extracting unit 111. The parallax information is supplied to the parallax information encoder 113. In the parallax information encoder 113, a predetermined encoding process is performed on the parallax information to generate the parallax information elementary stream containing the encoded data. The parallax information elementary stream is supplied to the multiplexer 117.

In addition, when the image data is output from the data extracting unit 111, the voice data corresponding to the image data is also output from the data extracting unit 111. The voice data is supplied to the audio encoder 114. In the audio encoder 114, an encoding process such as MPEG2 Audio AAC and the like is performed on the voice data to generate an audio elementary stream containing the encoded audio data. The audio elementary stream is supplied to the multiplexer 117.

In addition, in the graphics generating unit 115, the data (graphics data) of the graphics information (including subtitle information) superimposed on an image (view) is generated so as to correspond to the image data output from the data extracting unit 111. The graphics data is supplied to the graphics encoder 116. In the graphics encoder 116, a predetermined encoding process is performed on the graphics data to generate the graphics elementary stream containing the encoded data. The graphics elementary stream is supplied to the multiplexer 117.

In the multiplexer 117, the elementary streams supplied from the respective encoders are packetized and multiplexed to generate the transport stream TS. The transport stream TS is configured to include the video elementary stream of a base view, and the video elementary streams of a predetermined number of non-base views within a period during which the stereoscopic (3D) image data is output from the data extracting unit 111. In addition, the transport stream TS is configured to include the video elementary stream containing the two-dimensional image data within a period during which the two-dimensional (2D) image data is output from the data extracting unit 111.

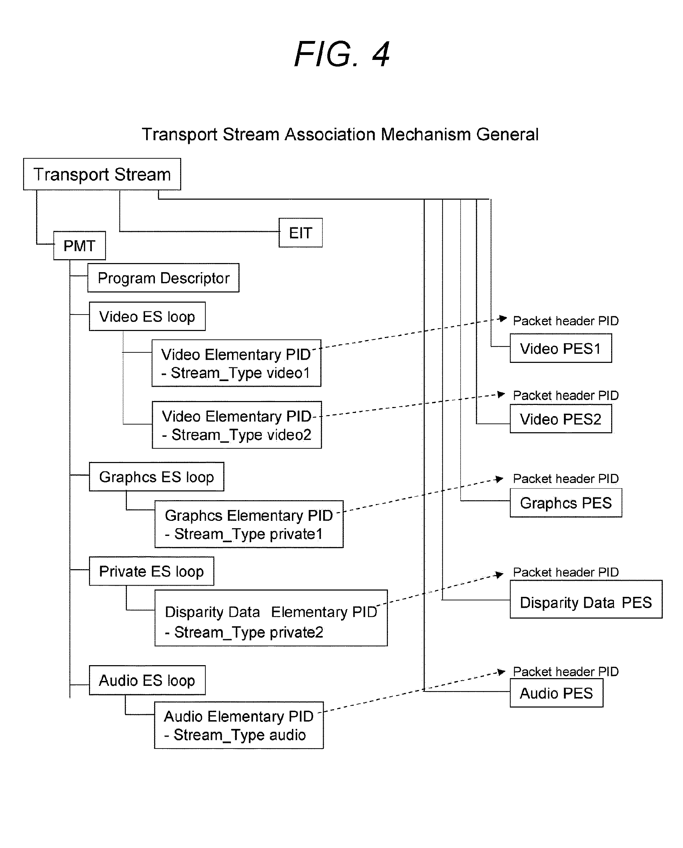

Fig. 4 illustrates a configuration example of a general transport stream containing a video elementary stream, an audio elementary stream, and the like. A PES packet obtained by packetizing each elementary stream is contained in the transport stream. In this configuration example, the PES packets "Video PES1" and "Video PES2" of two video elementary streams are contained. In addition, in the configuration example, the PES packet "Graphics PES" of the graphics elementary stream and the PES packet "Disparity Data PES" of a private elementary stream are contained. Further, in this configuration example, the PES packet "Audio PES" of the audio elementary stream is contained.

In addition, (Program Map Table) as PSI (Program Specific Information) is contained in the transport stream. The PSI is the information which describes to which program each elementary stream contained in the transport stream belongs. In addition, EIT (Event Information Table) as SI (Serviced Information) which manages an event unit is contained in the transport stream.

A program descriptor (Program Descriptor) which describes the information associated with the whole program exists in the PMT. An elementary loop with the information associated with each elementary stream exists in the PMT. In this configuration example, a video elementary loop, a graphics elementary loop, a private elementary loop, and an audio elementary loop exist. Information such as a packet identifier (PID), a stream type (Stream_Type), etc. is arranged for every stream in each elementary loop. Furthermore, although not illustrated, a descriptor which describes information associated with the elementary stream is also arranged.

[Stream Association Information]

As described above, the video encoder 112 inserts the stream association information at least into the video elementary stream (first elementary stream) containing the first image data on picture basis or GOP basis. The stream association information is information which indicates the association between each of elementary streams.

The stream association information is configured to indicate the association between each of the elementary streams using identifiers for identifying the respective elementary streams. In this case, it is necessary to associate a registration state in a transport stream layer of each elementary stream, with the stream association information. For example, a method is considered which defines a correspondence between the identifier of each elementary stream and the packet identifier or component tag of each elementary stream beforehand.

In the present embodiment, the multiplexer 117 inserts a descriptor, i.e. ES_ID descriptor that indicates a correspondence between the identifier of each elementary stream and the packet identifier or component tag of each elementary stream in the transport stream. The multiplexer 117 inserts the ES_ID descriptor under the PMT, for example.

In addition, in the present embodiment, the multiplexer 117 inserts a descriptor which indicates existence of the stream association information and the like, i.e., the ES_association descriptor into the transport stream. The descriptor indicates whether the stream association information has been inserted in the elementary stream, or whether there is a change in the stream association information inserted in the elementary stream. The multiplexer 117 inserts the ES_association descriptor under the PMT or EIT, for example.

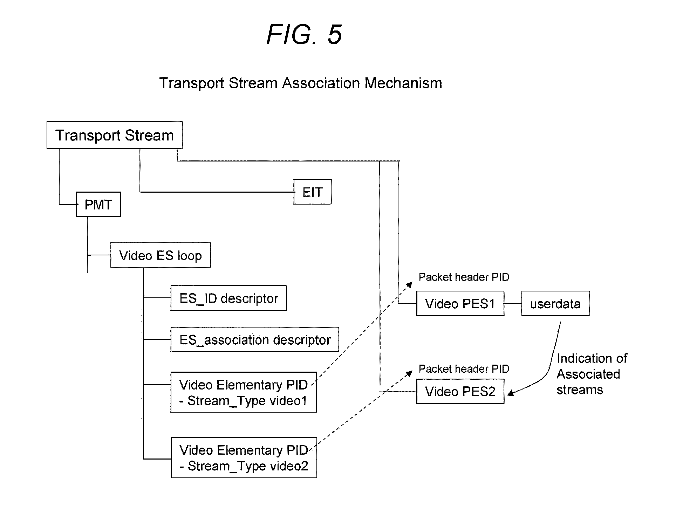

Fig. 5 illustrates a configuration example of the transport stream in the case of inserting the stream association information into the first elementary stream and furthermore inserting the ES_ID descriptor and the ES_association descriptor into the transport stream.

In this configuration example, the PES packet "Video PES1" of a video elementary stream (Stream_Type video1) of a base view is contained in the transport stream. In addition, in this configuration example, the PES packet "Video PES2" of a video elementary stream (Stream_Type video2) of a non-base view is contained in the transport stream. In addition, in this configuration example, to simplify the description of the drawings, illustration of other PES packets is not given.

In this configuration example, the ES_ID descriptor that indicates the correspondence between the identifier ES_ID of each elementary stream and the packet identifier PID or component tag of each elementary stream is inserted in the video elementary loop.

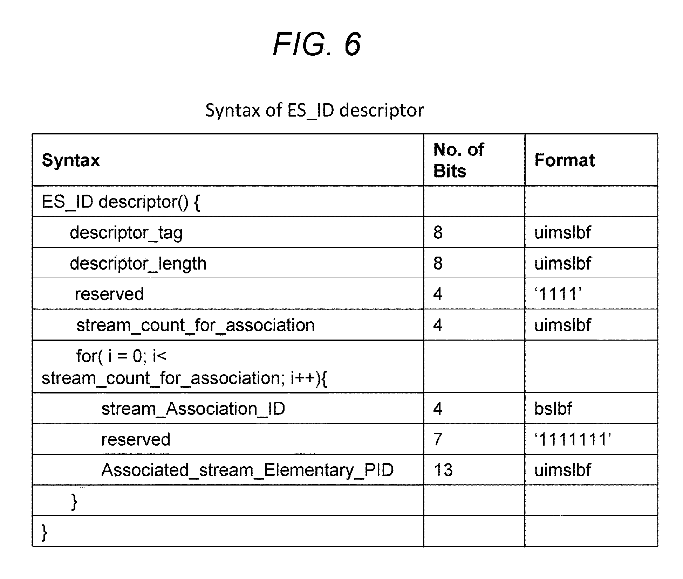

Fig. 6 illustrates a structural example (Syntax) of the ES_ID descriptor. "descriptor_tag" is 8-bit data which indicates a descriptor type, and indicates here that it is the ES_ID descriptor. "descriptor_length" is 8-bit data which indicates a length (size) of a descriptor. This data indicates the number of bytes existing behind "descriptor_length" as the length of a descriptor.

"stream_count_for_association" is 4-bit data which indicates the number of streams. The "for" loop is repeated as many times as the number of the streams. A 4-bit field of "stream_Association_ID" indicates the identifier (ES_ID) of each elementary stream. In addition, a 13-bit field of "Associated_stream_Elementary_PID" indicates the packet identifier PID of each elementary stream. In order to indicate the correspondence between the identifier of each elementary stream and the component tag of each elementary stream, "Component_tag" is arranged instead of "Associated_stream_Elementary_PID."

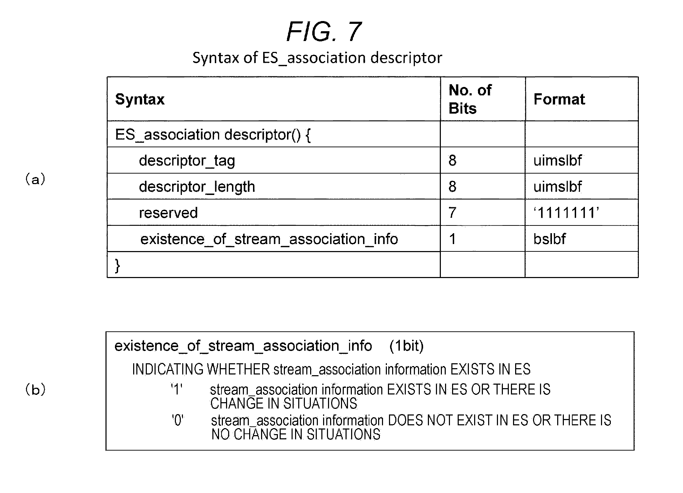

Fig. 7(a) illustrates a structural example (Syntax) of the ES_association descriptor. "descriptor_tag" is 8-bit data which indicates a descriptor type, and indicates here that it is the ES_association descriptor. "descriptor_length" is 8-bit data which indicates a length (size) of a descriptor. This data indicates the number of bytes existing behind "descriptor_length" as the length of a descriptor.

A 1-bit field of "existence_of_stream_association_info" is a flag which indicates whether the stream association information exists in an elementary stream, as illustrated in Fig. 7(b)." "1" indicates that the stream association information exists in an elementary stream, and "0" indicates that the stream association information does not exist in an elementary stream. Alternatively, "1" indicates that there is a change in the stream association information inserted in an elementary stream, and "0" indicates that there is no change in the stream association information inserted in an elementary stream.

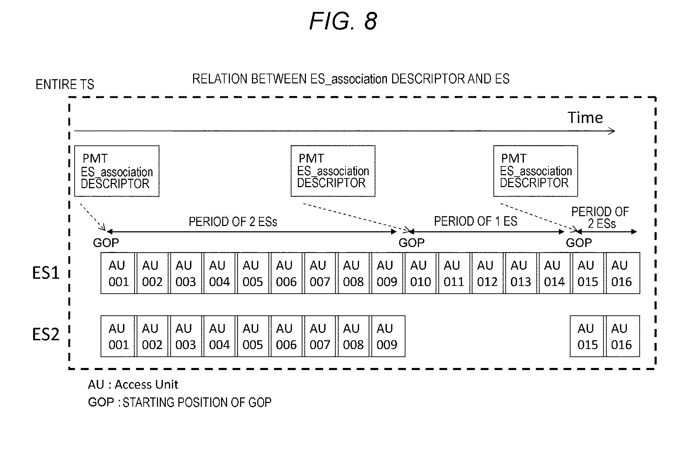

Fig. 8 illustrates an example of a relation between the stream association information inserted in an elementary stream, and the ES_association descriptor inserted in a transport stream. Because the stream association information exists in an elementary stream, the ES_association descriptor is inserted under the PMT of a transport stream and transmitted to prompt the receiving side to make reference thereto.

Because the decoder of the receiving side can make reference to the ES_association descriptor and detect that there is a change in the association configuration of each elementary stream from the following GOP, a stable reception operation can be achieved. In addition, when arrangement is fixed on program basis, the ES_association descriptor is placed under the EIT.

In addition, in the configuration example of Fig. 4, the stream association information which indicates the association between an elementary stream of a base view and a video elementary stream of a non-base view is inserted in the elementary stream of a base view. The stream association information is inserted on picture basis or GOP basis using a user data area.

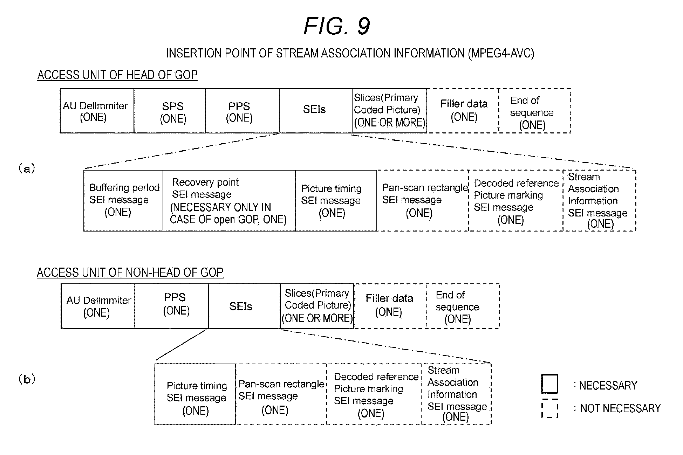

For example, when the encoding system is MPEG4-AVC, the stream association information is inserted in the portion "SELs" of an access unit as "Stream Association Information SEI message." Fig. 9(a) illustrates the access unit of the head of the GOP (Group Of Pictures), and Fig. 9(b) illustrates the access unit except for the head of the GOP. When the stream association information is inserted on GOP basis, "Stream Association Information SEI message" is inserted only in the access unit of the head of the GOP.

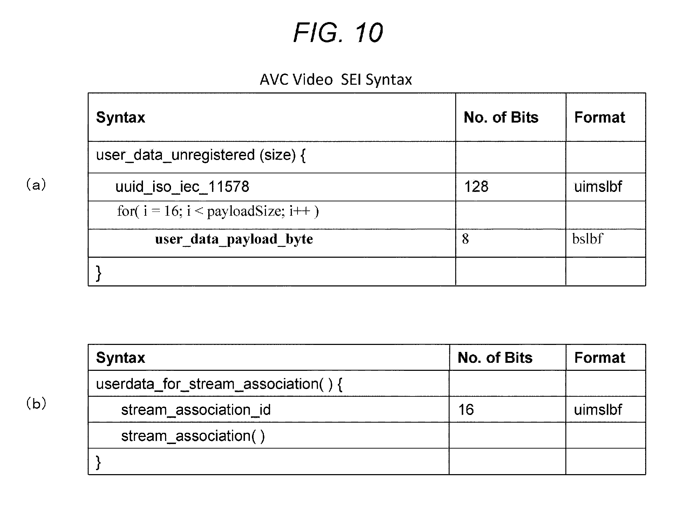

Fig. 10(a) illustrates a structural example (Syntax) of "Stream Association Information SEI message." "uuid_iso_iec_11578" has a UUID value shown in "ISO/IEC 11578:1996 AnnexA." "userdata_for_stream_association()" is inserted in the field "user_data_payload_byte." Fig. 10(b) illustrates a structural example (Syntax) of "userdata_for_stream_association()" in which "stream_association()" is inserted as the stream association information. "stream_association_id" is an identifier of the stream association information expressed by 16 bits without signs.

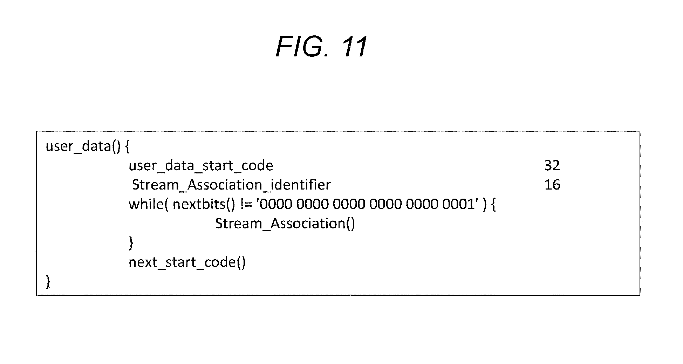

In addition, for example, when the encoding system is MPEG2 video, the stream association information is inserted in the user data area of a picture header portion as the user data "user_data()." Fig. 11 illustrates a structural example (Syntax) of "user_data()." A 32-bit field of "user_data_start_code" is a start code of the user data (user_data), and its value is the fixed value "0x000001B2." A 16-bit field which follows the start code is an identifier for identifying the contents of the user data. Here, because "Stream_Association_identifier" is stated, it is possible to identify that the user data is the stream association information. As a main body of data which follows the identifier, "stream_association()" which is the stream association information is inserted.

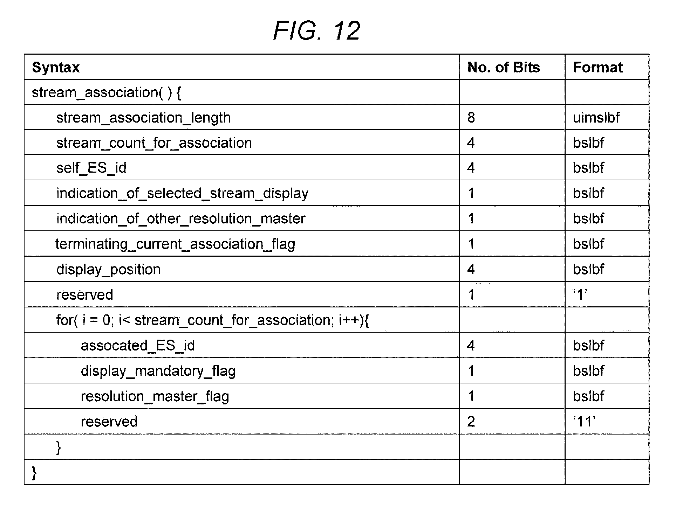

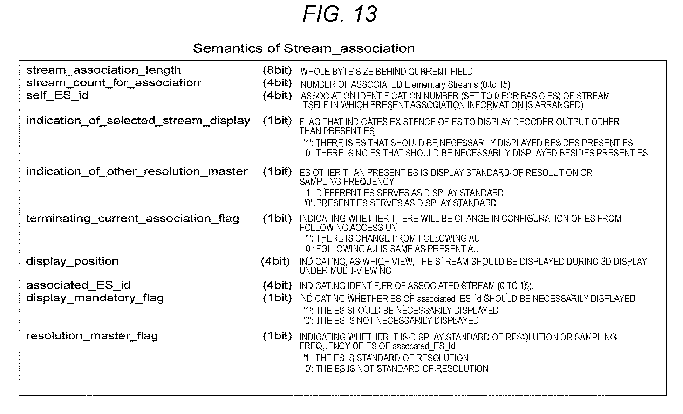

Fig. 12 illustrates a structural example (Syntax) of the stream association information "stream_association()." Fig. 13 illustrates the contents (Semantics) of each piece of information in the structural example illustrated in Fig. 12. An 8-bit field of "stream-association_length" indicates the entire byte size of a portion which follows this field. A 4-bit field of "stream_count_for_association" indicates the number of the associated elementary streams, and takes a value in the range of 0 to 15.

A 4-bit field of "self_ES_id" indicates an association identifier of an elementary stream (the present elementary stream) itself in which the present stream association information is arranged. For example, the identifier of a basic elementary stream (the first elementary stream containing the first image data) is set to "0."

A 1-bit field of "indication_of_selected_stream_display" is a flag which indicates whether there is an elementary stream which should be necessarily displayed, to display the output of the decoder, besides the present elementary stream. "1" represents that there is an elementary stream which should be necessarily displayed, besides the present elementary stream. "0" represents that there is no elementary stream which should be necessarily displayed except for the present elementary stream. In the case of "1", the elementary stream of a non-base view which is set in the "display_mandatory_flag" described below is necessarily displayed along with the elementary stream of a base view.

A 1-bit field of "indication_of_other_resolution_master" is a flag which indicates whether an elementary stream other than the present elementary stream is a display standard of a resolution or a sampling frequency. "1" represents that a different elementary stream is the display standard. ""0" represents that the present elementary stream is the display standard."

A 1-bit field of "terminating_current_association_flag" indicates whether there will be a change in the configuration of the elementary streams from the following access unit (AU: Access Unit). "1" represents that there will be a change in the configuration of the elementary streams from the following access unit." "0" represents that the following access unit has the same configuration of the elementary stream as the present access unit. This flag information makes up the previous announcement information.

A 4-bit field of "display_position" indicates whether the view based on the image data contained in the present elementary stream should be displayed as any one view in multi-viewing at the time of performing a stereoscopic (3D) display, and takes a value in the range of 0 to 15.

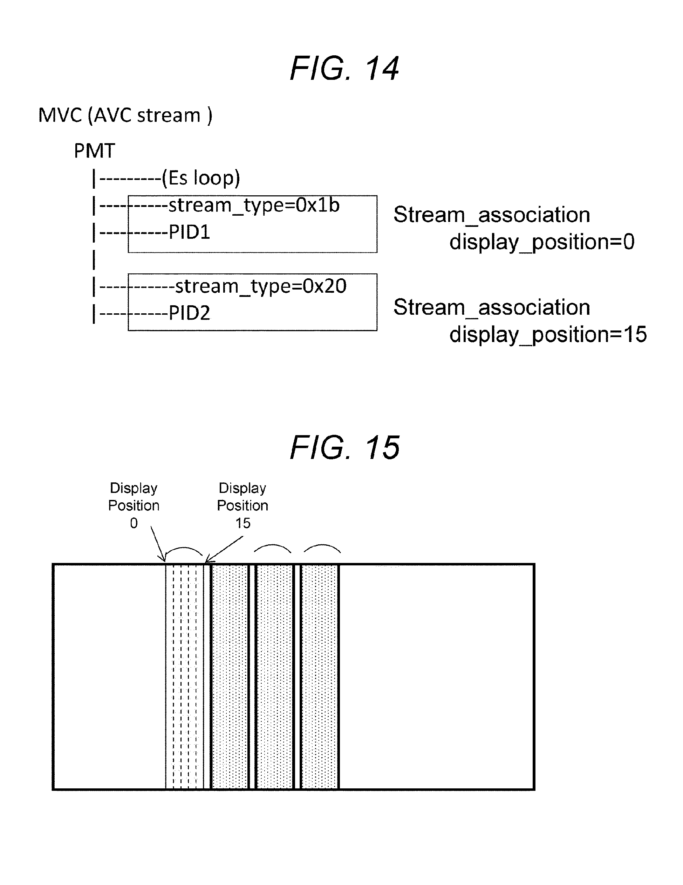

For example, as illustrated in Fig. 14, an example of a case is considered where a transport stream includes a stream of a base view of MVC sent by "Stream_Type=0x1B" of PMT, and a stream of a non-base view of MVC sent by "Stream_Type=0x20" of PMT. In this case, "display_position=0" is stated in the stream association information in a base view stream, and "display_position=15" is stated in the stream association information in a non-base view stream.

Fig. 15 illustrates a view display example at the time of performing a stereoscopic (3D) display in the receiving side. That is, the view based on the image data contained in the base view stream is displayed as a view at the display position "0." That is, the view based on the image data contained in the non-base view stream is displayed as a view at the display position "15."

Returning to Fig. 12, a 4-bit field of "associated_ES_id" indicates an identifier (association identifier) of an elementary stream associated with the present elementary stream, and takes a value in the range of 0 to 15. A 1-bit field of "display_mandatory_flag" indicates whether the elementary stream of "associated_ES_id" should be necessarily displayed. "1" represents that the corresponding elementary steam should be necessarily displayed. "0" represents that the corresponding elementary steam should not necessarily be displayed.

A 1-bit field of "resolution_master_flag" indicates whether the elementary stream of "associated_ES_id" is the display standard of a resolution or a sampling frequency. "1" represents that the corresponding elementary stream is the display standard. "0" represents that the corresponding elementary stream is not the display standard.

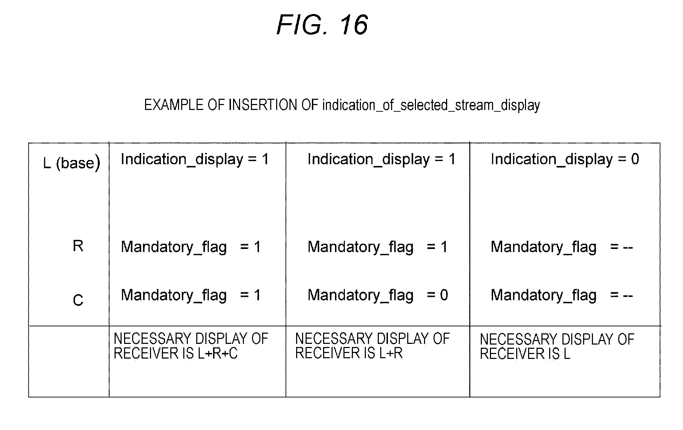

Fig. 16 illustrates an example of insertion of "indication of_selected_stream display." This example is an example in which the base view elementary stream contains image data for the left eye (L), and there are two non-base view elementary streams respectively containing image data for the right eye (R) and image data for the center (C). In addition, in Fig. 16, "indication_of_selected_stream_display" and "display_mandatory_flag" are simply expressed as "indication_display" and "mandatory_flag," respectively.

A case is considered where two non-base view elementary streams should be necessarily displayed as well as the base view. In this case, it is expressed as "indication_of_selected_stream display=1", and "display_mandatory_flag=1" is set for the elementary streams of two non-base views. With these settings, what should be necessarily displayed are images for the left eye (L), the right eye (R), and the center (C).

Further, a case is also considered where an elementary stream of a non-base view containing the image data for the right eye (R) as well as the present elementary stream of the base view should be necessarily displayed. In this case, it is expressed as "indication of_selected_stream_display=1", and "display_mandatory_flag=1" is set only for the elementary stream of the non-base view containing the image data of the right eye (R). With these settings, what should be necessarily displayed in the receiver are images for the left eye (L) and the right eye (R).

Still further, a case is considered where only the elementary stream of a base view should be necessarily displayed. In this case, it is expressed as "indication_of_selected_stream_display=0." With the settings, which should be necessarily displayed in the receiver are images for the left eye (L) only.

"Configuration Example of Receiver"

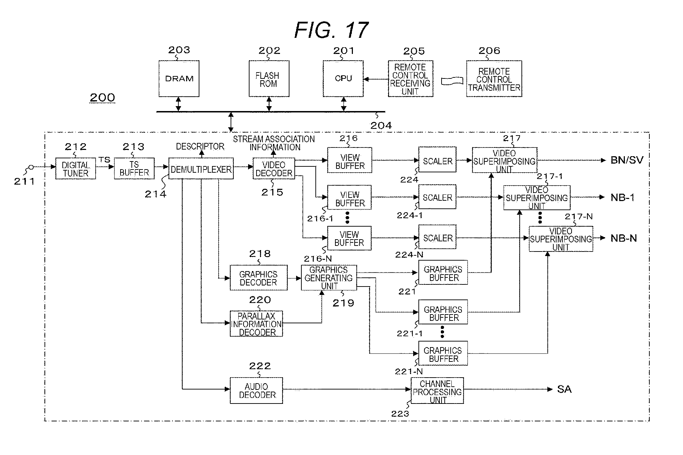

Fig. 17 illustrates a configuration example of the receiver 200. The receiver 200 includes a CPU 201, a flash ROM 202, a DRAM 203, an internal bus 204, a remote control receiving unit 205, and a remote control transmitter 206. The receiver 200 further includes an antenna terminal 211, a digital tuner 212, a transport stream buffer (TS buffer) 213, and a demultiplexer 214.

The receiver 200 still further includes a video decoder 215, view buffers 216 and 216-1 through 216-N, scalers 224 and 224-1 through 224-N, and video superimposing units 217 and 217-1 through 217-N. The receiver 200 yet further includes a graphics decoder 218, a graphics generating unit 219, a parallax information decoder 220, graphics buffers 221 and 221-1 to 221-N, an audio decoder 222, and a channel processing unit 223.

The CPU 201 controls operation of each unit of the receiver 200. The flash ROM 202 stores control software and keeps data. The DRAM 203 serves as a work area of the CPU 201. The CPU 201 develops software and data which are read from the flash ROM 202 on the DRAM 203 and activates the software, to control each unit of the receiver 200. The remote control receiving unit 205 receives a remote control signal (remote control code) transmitted from the remote control transmitter 206, and supplies it to the CPU 201. The CPU 201 controls each unit of the receiver 200 based on the remote control code. The CPU 201, the flash ROM 202, and the DRAM 203 are connected to the internal bus 204.

The antenna terminal 211 is a terminal to which a television broadcasting signal received via the receiving antenna (not illustrated) is input. The digital tuner 212 processes the television broadcasting signal input to the antenna terminal 211, and outputs a predetermined transport stream (bit stream data) TS corresponding to the user's selection channel. The transport stream buffer (TS buffer) 213 temporarily accumulates the transport stream TS output from the digital tuner 212.

As described above, the transport stream TS includes each of packets obtained by packetizing each of elementary streams of video, parallax information, graphics, audio, and the like. Therefore, in this case, the transport stream TS includes a first elementary stream containing first image data. In addition, the transport stream TS includes a predetermined number of second elementary streams containing the predetermined number of second image data and/or metadata associated with the first image data.

Here, in a case where only the first elementary stream containing the first image data exists, the first image data makes up two-dimensional (2D) image data. On the other hand, when one or a plurality of second elementary streams which contains the second image data exists in addition to the first elementary stream containing the first image data, the first image data and the predetermined number of second image data make up stereoscopic (3D) image data. Here, the first image data makes up image data of a base view, and the predetermined number of second image data are the image data of non-base views.

As described above, the stream association information (refer to Fig. 12) is inserted on picture basis or GOP basis in the video elementary stream of the transport stream TS, that is, at least in the first elementary stream containing the first image data, using the user data area.

In addition, as mentioned above, the ES_ID descriptor (refer to Fig. 6) is inserted in the transport stream TS, for example, under the PMT. The ES_ID descriptor represents a correspondence between the identifier of each elementary stream and the packet identifier or component tag of each elementary stream. The stream association information indicates the association between each of the elementary streams using identifiers for identifying the respective elementary streams. Accordingly, the association between a registration state in a transport stream layer of each elementary stream and the stream association information is recognized by using the ES_ID descriptor.

In addition, as described above, the ES_ID descriptor (refer to Fig. 7(a)) is inserted in the transport stream TS, for example, under the PMT or the EIT. The ES descriptor indicates whether the stream association information has been inserted in the elementary stream, or whether there is a change in the stream association information inserted in the elementary stream. Therefore, it is prompted to make reference to the stream association information by the ES_ association descriptor.

The demultiplexer 214 extracts the respective elementary streams of video, parallax information, graphics, and audio from the transport stream TS temporarily accumulated in the TS buffer 213. A parallax information elementary stream is extracted only when the video elementary stream of stereoscopic (3D) image data is contained in the transport stream TS.

In addition, the demultiplexer 214 extracts the ES_ID descriptor and the ES_association descriptor contained in the transport stream TS, and supplies them to the CPU 201. The CPU 201 recognizes the correspondence between the identifier of each elementary stream and the packet identifier or component tag of each elementary stream using the ES_ID descriptor. The CPU 201 recognizes whether the stream association information has been inserted in the video elementary stream, for example, the video elementary stream containing the first image data, or whether there is a change in the information using the ES_association descriptor.

The video decoder 215 performs a reverse process to the process performed by the video encoder 112 of the transmission data generating unit 110. That is, the video decoder 215 obtains decoded image data by performing a decoding process on the encoded image data contained in each of the video elementary streams extracted by the demultiplexer 214.

Here, when only the first elementary stream containing the first image data exists, the video decoder 215 obtains the first image data as two-dimensional (2D) image data. On the other hand, when one or a plurality of second elementary streams which contains the second image data exists as well as the first elementary stream containing the first image data, the video decoder 215 obtains stereoscopic (3D) image data. That is, the first image data is obtained as the image data of a base view, and a predetermined number of second image data are obtained as the image data of non-base views.

In addition, the video decoder 215 extracts the stream association information from the video elementary stream, for example, the first elementary stream containing the first image data, and supplies it to the CPU 201. The video decoder 215 performs the extracting process under control of the CPU 201. As described above, because it is possible to recognize whether the stream association information exists or whether there is a change in the information, based on the ES_association descriptor, the CPU 201 may cause the video decoder 215 to perform the extraction process as necessary.

The CPU 201 can recognize existence of the predetermined number of second elementary streams associated with the first elementary stream containing the first image data, based on the stream association information extracted by the video decoder 215. Based on the recognition, the CPU 201 controls the demultiplexer 214 so that the predetermined number of second elementary streams associated with the first elementary stream may be extracted along with the first elementary stream.

The view buffer (video buffer) 216 temporarily accumulates the first image data acquired by the video decoder 215 under control of the CPU 201. The first image data is the image data of a base view which makes up two-dimensional image data or stereoscopic image data. In addition, the view buffers (video buffers) 216-1 through 216-N temporarily, respectively accumulate the image data of N non-base views which make up the stereoscopic image data acquired by the video decoder 215 under control of the CPU 201.

The CPU 201 performs control of reading of the view buffers 216 and 216-1 through 216-N. The CPU 201 can recognize beforehand whether the configuration of the elementary stream will be changed from the following access unit (picture), based on the flag of "terminating_current_association_flag" contained in the stream association information. Therefore, it becomes possible to efficiently, dynamically change the control of reading of the view buffers 216 and 216-1 through 216-N.

The scalers 224 and 224-1 through 224-N adjust output resolutions of the image data of each view output from the view buffers 216 and 216-1 through 216-N under control of the CPU 201 so that the output resolutions becomes predetermined resolutions. The scalers 224 and 224-1 through 224-N make up the resolution adjuster. The image data of each view which has been adjusted in resolution is sent to the video superimposing units 217 and 217-1 and 217-N.

In this case, the CPU 201 acquires the resolution information of the image data of each view from the video decoder 215. The CPU 201 executes a filter setup process of the scalers 224 and 224-1 through 224-N, based on the resolution information of each view so that the output resolution of the image data of each view may become a target resolution. In the scalers 224 and 224-1 through 224-N, when the resolution of input image data differs from the target resolution, an interpolation process is performed for resolution conversion so that the output image data with the target resolution is obtained.

The CPU 201 sets the target resolution based on the flags of "resolution_master_flag" and "indication_of_ other_resolution_master" contained in the stream association information. That is, the resolution of the image data contained in the elementary stream which is determined as the resolution standard in these flags is set as the target resolution.

The graphics decoder 218 performs a reverse process to the process performed by the graphics encoder 116 of the transmission data generating unit 110. That is, the graphics decoder 218 obtains decoded graphics data (subtitle data) by performing a decoding process on the encoded graphics data contained in the graphics elementary stream extracted by the demultiplexer 214.

The parallax information decoder 220 performs a reverse process to the process performed by the parallax information encoder 113 of the transmission data generating unit 110. That is, the parallax information decoder 220 obtains decoded parallax information by performing a decoding process on the encoded parallax information contained in the parallax information elementary stream extracted by the demultiplexer 214. The parallax information is a parallax vector which indicates parallax between the base view and each of the non-base views, or depth data. The depth data can be treated like a parallax vector through a predetermined conversion. The parallax information is, for example, parallax information on pixel (pixel) basis, or parallax information on divided area basis obtained by dividing a view (image) into a predetermined number of areas.

The graphics generating unit 219 generates the data of the graphics information to be superimposed on an image, based on graphics data obtained using the graphics decoder 218 under control of the CPU 201. The graphics generating unit 219 generates the data of the graphics information to be superimposed on the two-dimensional image data, when only the two-dimensional image data (the first image data) is output from the video decoder 215. In addition, the graphics generating unit 219 generates the data of the graphics information to be superimposed on the image data of each view, when the image data of each view which makes up stereoscopic (3D) image data is output from the video decoder 215.

The graphics buffer 221 accumulates the data of the graphics information, which is generated by the graphics generating unit 219 under control of the CPU 201, to be superimposed on the first image data. The first image data is the image data of a base view which makes up two-dimensional image data or stereoscopic image data. In addition, the graphics buffers 221-1 through 221-N accumulate the data of the graphics information, which is generated by the graphics generating unit 219, to be superimposed on the image data of N non-base views.

The video superimposing unit (display buffer) 217 outputs the first image data on which the graphics information has been superimposed under control of the CPU 201. The first image data is image data BN of a base view which makes up two-dimensional image data SV or stereoscopic image data. At this point, the video superimposing unit 217 superimposes the data of the graphics information, accumulated in the graphics buffer 221, on the first image data which has been adjusted in resolution by the scaler 224.

In addition, the video superimposing units (display buffers) 217-1 through 217-N output the image data NB-1 through NB-N of N non-base views on which the graphics information has been superimposed under control of the CPU 201. At this point, the video superimposing units 217-1 to 217-N superimpose the data of the graphics information, accumulated in the graphics buffers 221-1 through 221-N, on the image data of the base views which have been adjusted in resolution by the scalers 224-1 through 224-N, respectively.

In addition, when the image data of each view which makes up stereoscopic (3D) image data is output from the video decoder 215, as described above, basically, multiple pieces of the image data are output from the video superimposing units 217 and 217-1 through 217-N, respectively. However, according to the user's selection operation, the CPU 201 controls the output of the image data of the non-base views.

However, the CPU 201 performs control such that the image data of the non-base views which should be necessarily displayed are surely output regardless of the user's selection operation. The CPU 201 can recognize the image data of the non-base views which should be necessarily displayed, based on the flags of "display_mandatory_ flag" and "indication_of_selected_stream_display" contained in the stream association information.

For example, a case is considered where the video elementary stream of the non-base view containing right eye image data is associated with the video elementary stream of the base view containing left eye image data. In this case, when "indication_of_selected_stream_display" is "1" and when "display_mandatory_flag" of the non-base view is "1", both of the left eye image data and the right eye image data are output as display image data regardless of the user's selection operation. On the other hand, when "indication_of_selected_stream_display" is "0", only the left eye image data or both of the left eye image data and the right eye image data is output as the display image data according to the user's selection operation.

The audio decoder 222 performs a reverse process to the process performed by the audio encoder 114 of the transmission data generating unit 110. That is, the audio decoder 222 obtains decoded voice data by performing a decoding process on the encoded voice data contained in the audio elementary stream extracted by the demultiplexer 214. The channel processing unit 223 generates and outputs voice data SA of each channel for realizing, for example, 5.1ch surround, etc. with the voice data obtained by the audio decoder 222.

Operation of the receiver 200 is described briefly. A television broadcasting signal input into the antenna terminal 211 is supplied to the digital tuner 212. In the digital tuner 212, the television broadcasting signal is processed and a predetermined transport stream TS corresponding to user-selected channel is output. This transport stream TS is temporarily accumulated in the TS buffer 213.

In the demultiplexer 214, each of the elementary streams of video, parallax information, graphics, and audio is extracted from the transport stream TS temporarily accumulated in the TS buffer 213. A parallax information elementary stream is extracted only when the video elementary stream of stereoscopic (3D) image data is contained in the transport stream TS.

In addition, in the demultiplexer 214, the ES_ID descriptor and the ES_association descriptor contained in the transport stream TS are extracted and then supplied to the CPU 201. In the CPU 201, the correspondence between the identifier of each elementary stream and the packet identifier or the component tag of each elementary stream is recognized, by making reference to the ES_ID descriptor. In addition, in the CPU 201, whether the stream association information has been inserted in the video elementary stream, for example, the video elementary stream containing the first image data, or whether there is a change in the information is recognized, by making reference to the ES_association descriptor.

That is, in the video decoder 215, a decoding process is performed on the encoded image data contained in each of the video elementary streams extracted by the demultiplexer 214 so that decoded image data is obtained. Here, when only the first elementary stream containing the first image data exists, in the video decoder 215, the first image data is obtained as two-dimensional (2D) image data. In addition, when one or a plurality of second elementary streams which contains the second image data exists besides the first elementary stream containing the first image data, in the video decoder 215, stereoscopic (3D) image data is obtained. That is, the first image data is obtained as the image data of a base view, and a predetermined number of second image data are obtained as the image data of non-base views.

In addition, in the video decoder 215, the stream association information is extracted from the video elementary stream, for example, the first elementary stream containing the first image data, and is supplied to the CPU 201. In the video decoder 215, the extracting process is performed under control of the CPU 201. As described above, because it is possible to recognize whether the stream association information exists or whether there is a change in the information, based on the ES_association descriptor, the CPU 201 may cause the video decoder 215 to perform the extraction process as necessary.

In the CPU 201, existence of the predetermined number of second elementary streams associated with the first elementary stream containing the first image data is recognized by making reference to the stream association information extracted by the video decoder 215. In the CPU 201, based on the recognition, the demultiplexer 214 is controlled such that the predetermined number of second elementary streams associated with the first elementary stream are extracted along with the first elementary stream.

In the view buffer (video buffer) 216, the first image data acquired by the video decoder 215 is temporarily accumulated under control of the CPU 201. The first image data is the image data of a base view which makes up two-dimensional image data or stereoscopic image data. In addition, in the view buffers (video buffers) 216-1 through 216-N, the image data of N non-base views which makes up the stereoscopic image data acquired by the video decoder 215 are temporarily, respectively accumulated under control of the CPU 201.

In the CPU 201, control of reading of the view buffers 216 and 216-1 through 216-N is performed. In the CPU 201, whether the configuration of the elementary stream will be changed from the following access unit (picture) is recognized beforehand, by making reference to the flag of "terminating_current_association_flag" contained in the stream association information. Therefore, it becomes possible to efficiently, dynamically change the control of reading of the view buffers 216 and 216-1 through 216-N.

In the scalers 224 and 224-1 through 224-N, the output resolution of the image data of each view output from the view buffers 216 and 216-1 through 216-N is adjusted under control of the CPU 201 such that the output resolution matches a predetermined resolution. Accordingly, the image data of each view which has been adjusted in resolution is sent to the video superimposing units 217 and 217-1 and 217-N. In this case, in the CPU 201, the resolution information of the image data of each view is obtained from the video decoder 215.

Subsequently, in the CPU 201, a filter setup process of the scalers 224 and 224-1 through 224-N is performed, based on the resolution information of each view so that the output resolution of the image data of each view may match the target resolution. Therefore, in the scalers 224 and 224-1 through 224-N, when the resolution of the input image data differs from the target resolution, an interpolation process is performed for resolution conversion so that the output image data with the target resolution is obtained.

In the CPU 201, the target resolution is set based on the flags of "resolution_master_flag" and "indication_of_other_resolution_master" contained in the stream association information. In this case, the resolution of the image data contained in the elementary stream which is determined as the resolution standard by these flags is set as the target resolution.

In the graphics decoder 218, a decoding process is performed on the encoded graphics data contained in the graphics elementary stream extracted by the demultiplexer 214, so that the decoded graphics data (including subtitle data) is obtained.

That is, in the parallax information decoder 220, a decoding process is performed on the encoded parallax information contained in the parallax information elementary stream extracted by the demultiplexer 214, so that the decoded parallax information is obtained. The parallax information is a parallax vector which indicates parallax between the base view and each of the non-base views, or depth data. The depth data can be treated like a parallax vector through a predetermined conversion.

In the graphics generating unit 219, the data of the graphics information to be superimposed on an image is generated based on the graphics data obtained by the graphics decoder 218. In the graphics generating unit 219, the data of the graphics information to be superimposed on two-dimensional image data is generated when only the two-dimensional image data (first image data) is output from the video decoder 215. In addition, in the graphics generating unit 219, the data of the graphics information to be superimposed on the image data of each view is generated when the image data of each view which makes up stereoscopic (3D) image data is output from the video decoder 215.

In the graphics buffer 221, the data of the graphics information, which is generated by the graphics generating unit 219, to be superimposed on the first image data is accumulated. The first image data is the image data of a base view which makes up two-dimensional image data or stereoscopic image data. In addition, in the graphics buffers 221-1 through 221-N, the data of the graphics information, which is generated by the graphics generating unit 219, to be superimposed on the image data of N non-base views is accumulated.

In the video superimposing unit (display buffer) 217, the data of the graphics information accumulated in the graphics buffer 221 is superimposed on the first image data which has been adjusted in resolution by the scaler 224. Then, the first image data on which graphics information has been superimposed is output from the video superimposing unit 217. The first image data is image data BN of a base view which makes up two-dimensional image data SV or stereoscopic image data.

In addition, in the video superimposing units 217-1 to 217-N, the data of the graphics information accumulated in the graphics buffers 221-1 through 221-N is superimposed on the image data of the base views which have been adjusted in resolution by the scalers 224-1 through 224-N, respectively. Then, image data NB-1 through NB-N of N non-base views on which the graphics information has been superimposed are output from the video superimposing units 217-1 through 217-N.

In the audio decoder 222, a decoding process is performed on the encoded voice data contained in the audio elementary stream extracted by the demultiplexer 214, so that decoded voice data is obtained. In the channel processing unit 223, the voice data obtained by the audio decoder 222 is processed so that the voice data SA of each channel for realizing, for example, 5.1 ch surround, etc. is generated and output.

As described above, in the image transmitting/receiving system 10 illustrated in Fig. 1, the stream association information which shows the association between each of the elementary streams is inserted in the elementary stream included in the transport stream TS transmitted to the receiver 200 from the broadcasting station 100 (refer to Fig. 12). The stream association information shows the association between the first elementary stream containing the first image data (two-dimensional image data or image data of a base view), and the second elementary streams containing a predetermined number of second image data and/or metadata. Therefore, in the receiver 200, based on the stream association information, it is possible to correctly respond to dynamic changes in the configuration of elementary streams, i.e., dynamic changes in the distribution contents, and to perform right stream reception.

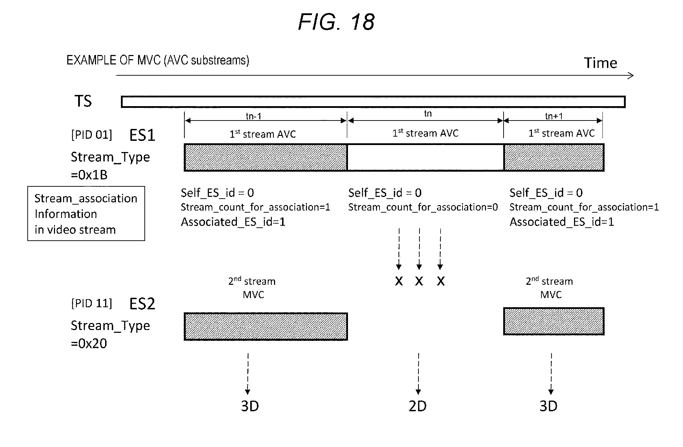

Fig. 18 illustrates an example where a stream ES1 of a base view of MVC where it is "PID=01" and "Stream_Type=0x1B" is contained in a continuous manner in a transport stream TS, and a stream ES2 of a non-base view of MVC where it is "PID=11" and "Stream_Type=0x20" is contained in an intermittent manner in the transport stream TS. In this case, the stream association information is inserted in the stream ES1. In addition, it is assumed that the identifier ES_id of the stream ES1 is 0 and the identifier ES_id of the stream ES2 is 1.

The stream ES2 and the stream ES1 coexist during the periods of tn-1 and tn+1. Therefore, because "Stream_count_for_association=1" is stated in the stream association information, it is understood that there is one stream associated with the stream ES1, and the identifier ES_id of the stream is 1. That is, in the stream association information, the stream ES1 and the stream ES2 are associated with each other. Therefore, both of the streams ES1 and ES2 are extracted and decoded, so that the image data of a base view, for example, the image data for the left eye, and the image data of a non-base view, for example, the image data for the right eye, are output as display image data, and a stereoscopic (3D) display is performed.

In addition, only the stream ES1 exists during the period of tn. Therefore, because "Stream_count_for_association=0" is stated in the stream association information, it is understood that there is no stream associated with the stream ES1. Therefore, only the stream ES1 is extracted and decoded, so that it is output as two-dimensional image data and as a result, a two-dimensional (2D) display is performed.

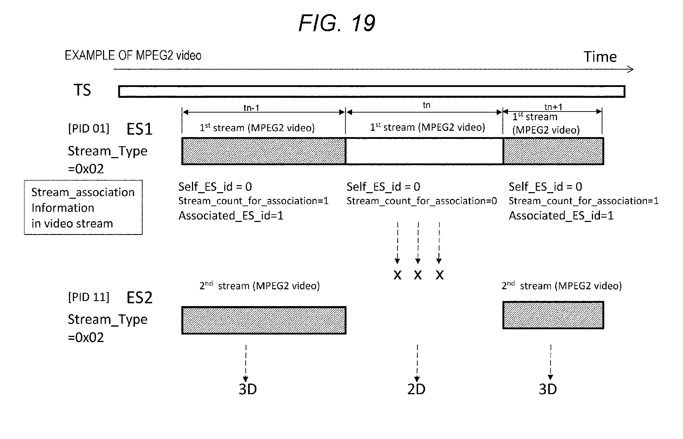

Fig. 19 illustrates an example where an MPEG2 video stream ES1 where it is "PID=01" and "Stream_Type=0x02" is contained in a continuous manner in a transport stream TS, and an MPEG2 video stream ES2 where it is "PID=11" and "Stream_Type=0x02" is contained in an intermittent manner in the transport stream TS. In this case, the stream association information is inserted in the stream ES1. In addition, it is assumed that the identifier ES_id of the stream ES1 is 0 and the identifier ES_id of the stream ES2 is 1.

The stream ES2 and the stream ES1 coexist during the periods of tn-1 and tn+1. Therefore, because "Stream_count_for_association=1" is stated in the stream association information, it is understood that there is one stream associated with the stream ES1, and the identifier ES_id of the stream is 1. That is, in the stream association information, the stream ES1 and the stream ES2 are associated with each other. Therefore, both of the streams ES1 and ES2 are extracted and decoded, so that the first image data, for example, the image data for the left eye, and the second image data, for example, the image data for the right eye, are output as display image data, and a stereoscopic (3D) display is performed.

In addition, only the stream ES1 exists during the period of tn. Therefore, because "Stream_count_for_association=0" is stated in the stream association information, it is understood that there is no stream associated with the stream ES1. Accordingly, only the stream ES1 is extracted and decoded, so that two-dimensional image data is output and a two-dimensional (2D) display is performed.

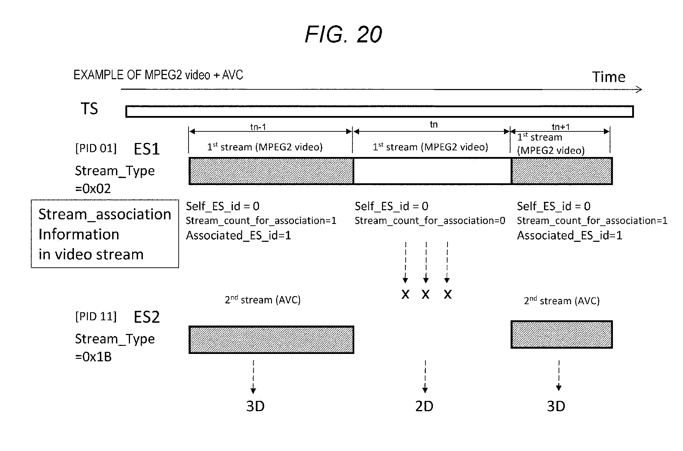

Fig. 20 illustrates an example where an MPEG2 video stream ES1 where it is "PID=01" and "Stream_Type=0x02" is contained in a continuous manner in a transport stream TS, and a stream ES2 of AVC where it is "PID=11" and "Stream_Type=0x1B" is contained in an intermittent manner in the transport stream TS. In this case, the stream association information is inserted in the stream ES1. In addition, it is assumed that the identifier ES_id of the stream ES1 is 0 and the identifier ES_id of the stream ES2 is 1.

The stream ES2 and the stream ES1 coexist during the periods of tn-1 and tn+1. Therefore, because "Stream_count_for_association=1" is stated in the stream association information, it is understood that there is one stream associated with the stream ES1, and the identifier ES_id of the stream is 1. That is, in the stream association information, the stream ES1 and the stream ES2 are associated with each other. Therefore, both of the streams ES1 and ES2 are extracted and decoded, so that the first image data, for example, the image data for the left eye, and the second image data, for example, the image data for the right eye, are output as display image data, and a stereoscopic (3D) display is performed.

In addition, only the stream ES1 exists during the period of tn. Therefore, because "Stream_count_for_association=0" is stated in the stream association information, it is understood that there is no stream associated with the stream ES1. Accordingly, only the stream ES1 is extracted and decoded, so that two-dimensional image data is output and a two-dimensional (2D) display is performed.

Moreover, in the image transmitting/receiving system 10 illustrated in Fig. 1, control information which specifies whether each of a predetermined number of second image data should be necessarily displayed is contained in the stream association information inserted in the elementary stream. That is, "indication_of_selected_stream_display" and "display_mandatory_flag" are contained in the stream association information (refer to Fig. 12). Therefore, in the receiver 200, based on the control information, it is possible to be aware which data of the predetermined number of second image data should be necessarily displayed, and it is possible to restrict user's selection of an image display state.

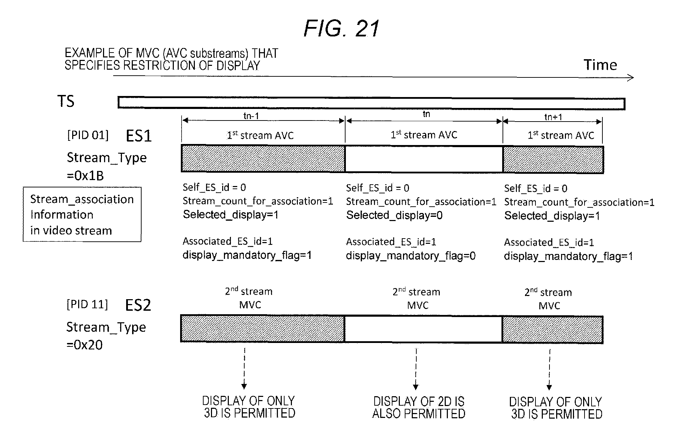

Fig. 21 illustrates an example where a stream ES1 of a base view of MVC where it is "PID=01" and "Stream_Type=0x1B" is contained in a continuous manner in a transport stream TS, and a stream ES2 of a non-base view of MVC where it is "PID=11" and "Stream_Type=0O20" is contained also in a continuous manner in the transport stream TS. In this case, the stream association information is inserted in the stream ES1. In addition, it is assumed that the identifier ES_id of the stream ES1 is 0 and the identifier ES_id of the stream ES2 is 1.

The stream ES2 and the stream ES1 coexist during the periods of tn-1 and tn+1. Therefore, because "Stream_count_for_association=1" is stated in the stream association information, it is understood that there is one stream associated with the stream ES1, and the identifier ES_id of the stream is 1. That is, in the stream association information, the stream ES1 and the stream ES2 are associated with each other.

In this period, by referring to "indication_of_selected_stream_display=1" in the stream association information, it is understood that there is another stream, besides itself, which should be necessarily displayed. Moreover, in the stream where the identifier ES-ID of the stream is set to 1, because "display_mandatory_flag=1" is stated in the stream association information, it is understood that the stream ES2 should be necessarily displayed. In addition, in Fig. 21, "indication_of_selected_stream_display" is simply written as a "Selected_display."

Therefore, during this period, both of the streams ES1 and ES2 are extracted and decoded, so that the image data of a base view, for example, the image data for the left eye, and the image data of a non-base view, for example, the image data for the right eye, are output as display image data, and a stereoscopic (3D) display is performed.

In addition, even during the period of tn, the stream ES2 and the stream ES1 coexist like the period of tn-1. Therefore, because "Stream_count_for_association=1" is stated in the stream association information, it is understood that there is one stream associated with the stream ES1, and the identifier ES_id of the stream is 1. That is, in the stream association information, the stream ES1 and the stream ES2 are associated with each other.

In this period, by referring to "indication_of_selected_stream_display=0" in the stream association information, it is understood that there is no stream which should be necessarily displayed except for the stream itself. Moreover, in the stream where the identifier ES_id of the stream is set to 1 in the stream association information, referring to "display_mandatory_flag=0", it is understood that the stream ES2 is not necessarily displayed.

Therefore, both of the streams ES1 and ES2 are extracted and decoded during this period. In this case, because the stream ES2 is not necessarily displayed, a two-dimensional (2D) display is allowed as well as a stereoscopic (3D) display according to user's selection operation. In the case of a stereoscopic (3D) display, the image data of a base view, for example, the image data for the left eye, and the image data of a non-base view, for example, the image data for the right eye are output as the display image data. On the other hand, in the case of a two-dimensional (2D) display, only the image data of a base view is output as the display image data.

In the image transmitting/receiving system 10 illustrated in Fig. 1, the previous announcement information which tells that there will be a change before the change actually occurs in the association between each of the elementary streams is included in the stream association information inserted in the elementary stream. That is, "terminating_current_association_flag" is contained in the stream association information (refer to Fig. 12). For this reason, in the receiver 200, it is possible to efficiently, dynamically change control of reading of the decoder buffers, based on the previous announcement information.

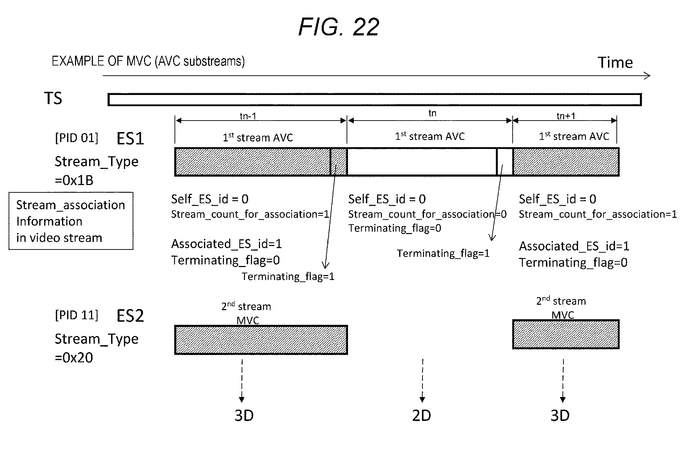

Fig. 22 illustrates an example where a stream ES1 of a base view of MVC where it is "PID=01" and "Stream_Type=0x1B" is contained in a continuous manner in a transport stream TS, and a stream ES2 of a non-base view of MVC where it is "PID=11" and "Stream_Type=0x20" is contained in an intermittent manner in the transport stream TS. In this case, the stream association information is inserted in the stream ES1. In addition, it is assumed that the identifier ES_id of the stream ES1 is 0 and the identifier ES_id of the stream ES2 is 1.

The stream ES2 and the stream ES1 coexist during the period of tn-1. Therefore, because "Stream_count_for_association=1" is stated in the stream association information, it is understood that there is one stream associated with the stream ES1, and the identifier ES_id of the stream is 1. That is, in the stream association information, the stream ES1 and the stream ES2 are associated with each other. Therefore, both of the streams ES1 and ES2 are extracted and decoded, so that the image data of a base view, for example, the image data for the left eye, and the image data of a non-base view, for example, the image data for the right eye, are output as display image data, and a stereoscopic (3D) display is performed.

Referring to "terminating_current_association_flag=1" found in the stream association information arranged in the last access unit within the period of tn-1, it is understood that there will be a change in the configuration of the elementary stream from the following access unit. In addition, in Fig. 22, "terminating_current_association_flag" is simply written as "Terminating_flg."

In addition, only the stream ES1 exists during the period of tn which follows the period of tn-1. Therefore, because "Stream_count_for_association=0" is stated in the stream association information, it is understood that there is no stream associated with the stream ES1. Therefore, only the stream ES1 is extracted and decoded, so that it is output as two-dimensional image data and as a result, a two-dimensional (2D) display is performed.

Referring to "terminating_current_association_flag=1" found in the stream association information arranged in the last access unit within the period of tn, it is understood that there will be a change in the configuration of the elementary stream from the following access unit.

Furthermore, during the period of tn+1 period which follows the period of tn, the same state as the period of tn-1 is maintained. The contents of the stream association information for this period is the same as that of the period of tn-1. Therefore, both of the streams ES1 and ES2 are extracted and decoded, so that the image data of a base view, for example, the image data for the left eye, and the image data of a non-base view, for example, the image data for the right eye, are output as display image data, and a stereoscopic (3D) display is performed.

In the image transmitting/receiving system 10 illustrated in Fig. 1, the stream association information is inserted in an elementary stream on picture basis or GOP basis. For this reason, in the receiver 200, it is possible to manage the configuration of the elementary stream, for example, the change in the number of views of the stereoscopic image data on picture basis or GOP basis.

In addition, in the image transmitting/receiving system 10 illustrated in Fig. 1, in a transport stream TS transmitted to the receiver 200 from the broadcasting station 100, a descriptor is inserted which indicates whether or not the stream association information is inserted in the elementary stream, or whether there is a change in the stream association information inserted in the elementary stream. That is, an ES_association descriptor is inserted in the transport stream TS. Referring to this ES_association descriptor, it is possible to prompt reference to the stream association information inserted in the elementary stream, and a stable receiving operation can be performed in the receiver 200.

Moreover, in the image transmitting/receiving system 10 illustrated in Fig. 1, control information on the output resolutions of the first image data and the second image data is contained in the stream association information inserted in the elementary stream. That is, "indication_of_other_resolution_master" and "resolution_master_flag" are contained in the stream association information. For this reason, in the receiver 200, based on the control information, the output resolutions of the first image data and the second image data can be adjusted to match the resolution of the display standard.

In addition, the above description has been in connection with an example where the stream association information is inserted only in the first elementary stream containing the first image data (two-dimensional image data or image data of a base view) (refer to Fig. 18 and the like). However, a configuration is further considered in which the stream association information is inserted also in the second elementary stream containing the second image data (image data of a non-base view).

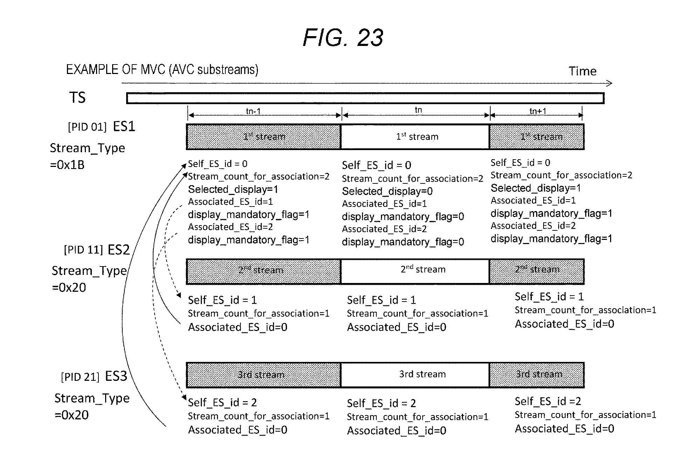

Fig. 23 illustrates an example where a stream ES1 of a base view of MVC where it is "PID=01" and "Stream_Type=0x1B" is contained in a transport stream TS, and streams ES2 and ES3 of non-base views of MVC where it is "PID=11", "PID=21" and "Stream_Type=0x20" are contained in the transport stream TS. In this case, stream association information is inserted not only in the stream ES1 but also in the streams ES2 and ES3. In addition, it is assumed that an identifier ES_id of the stream ES1 is 0, an identifier ES_id of the stream ES2 is 1, and an identifier ES_id of the stream ES3 is 2.

Therefore, because "Stream_count_for_association=2" is stated in the stream association information inserted in the stream ES1, it is understood that there are two streams associated with the stream ES1, and the identifiers ES_id of the streams are 1 and 2. Because "Stream_count_for_association=1" is stated in the stream association information inserted in the stream ES2, it is understood that there is one stream associated with the stream ES2, and the identifier ES_id of the stream is 0. In addition, because "Stream_count_for_association=1" is stated in the stream association information inserted in the stream ES3, it is understood that there is one stream associated with the stream ES3, and the identifier ES_id of the stream is 0.

Because "indication_of_selected_stream_display=1" is stated in the stream association information inserted in the stream ES1 for periods of tn-1 and tn+1, it is understood that there is another stream, besides itself, which should be necessarily displayed. Moreover, in the streams where the identifiers ES_id of the streams are 1 and 2, because "display_mandatory_flag=1" is stated, it is understood that both of the streams ES2 and ES3 should be necessarily displayed.

In addition, because "indication_of_selected_stream_display=0" is stated in the stream association information inserted in the stream ES1 for a period of tn, it is understood that there are no streams which should be necessarily displayed except for the corresponding stream itself. Moreover, in the streams where the identifiers ES_id of the streams are 1 and 2, because "display_mandatory_flag=0" is stated, it is understood that both of the streams ES2 and ES3 are not necessarily displayed.

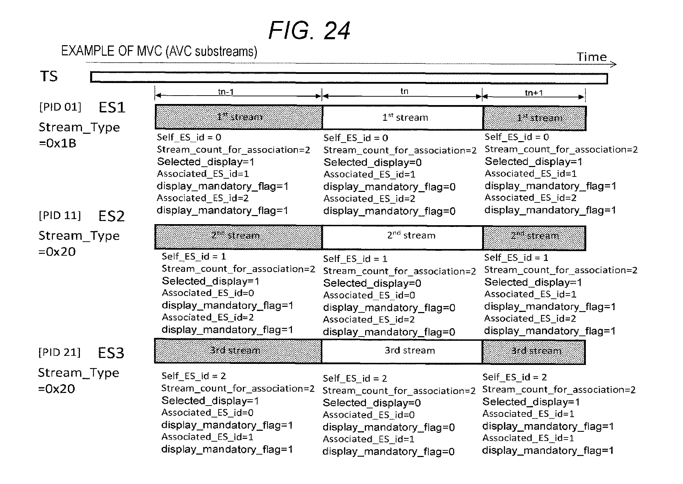

Like Fig. 23, Fig. 24 illustrates an example where a stream ES1 of a base view of MVC where it is "PID=01" and "Stream_Type=0x1B" is contained in a transport stream TS, and streams ES2 and ES3 of non-base views of MVC where it is "PID=11", "PID=21" and "Stream_Type=0x20" are contained in the transport stream TS. In this case, stream association information is inserted not only in the stream ES1 but also in the streams ES2 and ES3. In addition, it is assumed that an identifier ES_id of the stream ES1 is 0, an identifier ES_id of the stream ES2 is 1, and an identifier ES_id of the stream ES3 is 2.

Therefore, because "Stream_count_for_association=2" is stated in the stream association information inserted in the stream ES1, it is understood that there are two streams associated with the stream ES1, and the identifiers ES_id of the streams are 1 and 2. Because "Stream_count_for_association=2" is stated in the stream association information inserted in the stream ES2, it is understood that there are two streams associated with the stream ES2, and the identifiers ES_id of the streams are 0 and 2. In addition, because "Stream_count_for_association=2" is stated in the stream association information inserted in the stream ES3, it is understood that there are two streams associated with the stream ES3, and the identifiers ES_id of the streams are 0 and 1.

Because "indication_of_selected_stream_display=1" is stated in the stream association information inserted in the stream ES1 for periods of tn-1 and tn, it is understood that there is another stream which should be necessarily displayed, besides the corresponding stream itself. Moreover, in the streams where the identifiers ES_id of the streams are 1 and 2, because "display_mandatory_flag=1" is stated, it is understood that both of the streams ES2 and ES3 should be necessarily displayed.

Because "indication_of_selected_stream_display=1" is stated in the stream association information inserted in the stream ES2 for the periods of tn-1 and tn, it is understood that there are other streams which should be necessarily displayed, besides the corresponding stream itself. In addition, in the streams where the identifiers ES_id of the streams are 0 and 2, because "display_mandatory_flag=1" is stated, it is understood that both of the streams ES1 and ES3 should be necessarily displayed.

In addition, because "indication_of_selected_stream_display=1" is stated in the stream association information inserted in the stream ES3 for the periods of tn-1 and tn, it is understood that there are other streams which should be necessarily displayed, besides the corresponding stream itself. In addition, in the streams where the identifiers ES_id of the streams are 0 and 1, because "display_mandatory_flag=1" is stated, it is understood that both of the streams ES1 and ES2 should be necessarily displayed.

In addition, because "indication_of_selected_stream_display=0" is stated in the stream association information inserted in the stream ES1 for a period of tn, it is understood that there are no streams which should be necessarily displayed except for the corresponding stream itself. Moreover, in the streams where the identifiers ES_id of the streams are 1 and 2, because "display_mandatory_flag=0" is stated, it is understood that both of the streams ES2 and ES3 are not necessarily displayed.

In addition, because "indication_of_selected_stream_display=0" is stated in the stream association information inserted in the streams ES2 and ES3 for the period of tn, it is understood that there are no other streams which should be necessarily displayed except for the corresponding stream itself. However, as described above, because "indication_of_selected_stream_display=0" is stated in the stream association information inserted in the stream ES1, it is understood that there are no other streams which should be necessarily displayed except for the corresponding stream itself. Therefore, the information "being necessarily displayed" in the stream association information inserted in the streams ES2 and ES3 is disregarded.


<2. Modification>


In the above-mentioned embodiment, encodings of MPEG4-AVC and MPEG2 video have been presented as encoding systems of image data. However, the encodings to be performed on image data is not limited to these.

In addition, the above-mentioned embodiment has presented an example where a stream of a base view and streams of a non-base views are mainly associated with each other with stream association information. However, a case where metadata, for example, associated with image data of a base view is associated with the stream association information may be considered. As the metadata, parallax information (a parallax vector or depth data), etc. may be considered, for example.

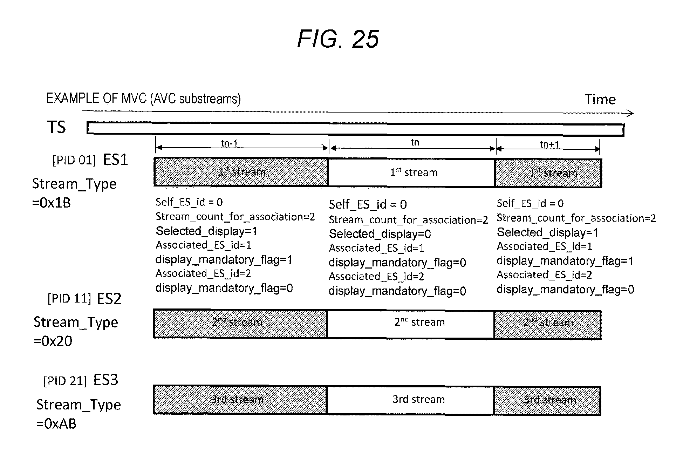

Fig. 25 illustrates an example where a stream ES1 of a base view of MVC where it is "PID=01" and "Stream_Type=0x1B" is contained in a transport stream TS, a stream ES2 of a non-base view of MVC where it is "PID=11" and "Stream_Type=0x20" is contained in the transport stream TS, and furthermore a metadata stream ES3 where it is "PID=21" and "Stream_Type=0xAB" is contained in the transport stream TS. In addition, it is assumed that an identifier ES_id of the stream ES1 is 0, an identifier ES_id of the stream ES2 is 1, and an identifier ES_id of the stream ES3 is 2.

Therefore, because "Stream_count_for_association=2" is stated in the stream association information inserted in the stream ES1, it is understood that there are two streams associated with the stream ES1, and the identifiers ES_id of the streams are 1 and 2. In this example, the stream association information is inserted in the streams ES2 and ES3.

Because "indication_of_selected_stream_display=1" is stated in the stream association information inserted in the stream ES1 for periods of tn-1 and tn+1, it is understood that there is another stream, besides itself, which should be necessarily displayed. Moreover, in the streams where the identifier ES_id of the stream is 1, because "display_mandatory_flag=1" is stated, it is understood that the streams ES2 should be necessarily displayed. In addition, because "indication_of_selected_stream_display=0" is stated in the stream association information inserted in the stream ES1 for a period of tn, it is understood that there are no other streams which should be necessarily displayed except for the corresponding stream itself.

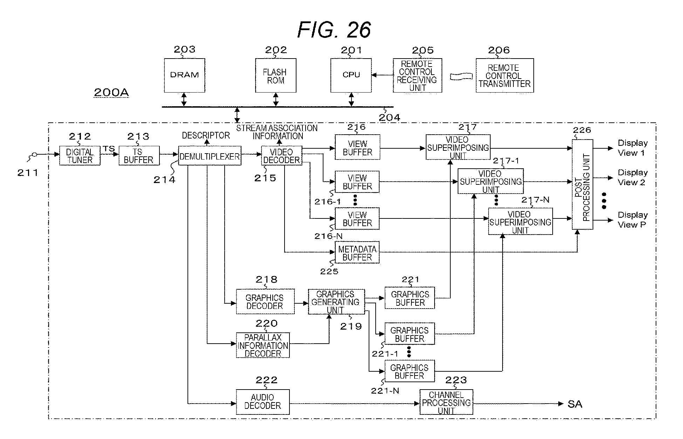

Fig. 26 shows a configuration example of a receiver 200A provided with a post processing unit. In Fig. 26, portions corresponding to Fig. 17 are denoted by like reference signs, and the detailed description thereof is not repeated.

In addition, in the receiver 200A, scalers 224 and 224-1 through 224-N are not provided. The receiver 200A includes a CPU 201, a flash ROM 202, a DRAM 203, an internal bus 204, a remote control receiving unit 205, and a remote control transmitter 206. The receiver 200 further includes an antenna terminal 211, a digital tuner 212, a transport stream buffer (TS buffer) 213, and a demultiplexer 214.

The receiver 200A further includes a video decoder 215, view buffers 216 and 216-1 through 216-N, video superimposing units 217 and 217-1 through 217-N, a metadata buffer 225, and a post processing unit 226. The receiver 200 yet further includes a graphics decoder 218, a graphics generating unit 219, a parallax information decoder 220, graphics buffers 221 and 221-1 to 221-N, an audio decoder 222, and a channel processing unit 223.

The metadata buffer 225 temporarily accumulates parallax information for each pixel (pixel) acquired by the video decoder 215. In addition, the parallax information can be treated like pixel data when the parallax information is parallax information on pixel (pixel) basis. When the parallax information on pixel (pixel) basis is acquired by the video decoder 215, encoding of the parallax information is executed by the same mode as the encoding system of the image data to generate a parallax information elementary stream.

The post processing unit 226 performs an interpolation process (post process) on image data of each view output from the view buffers 216 and 216-1 through 216-N using the parallax information on pixel (pixel) basis accumulated in the metadata buffer 225, to obtain display data Display View 1 through Display View P of a predetermined number of views.

Although others in the receiver 200A illustrated in Fig. 26 are not described in detail, the other parts are configured and operate in the same manner as the receiver 200 illustrated in Fig. 17.

In addition, the above-mentioned embodiment has presented an example where a plurality of elementary streams containing image data of a base view and non-base views for a stereoscopic (3D) display is associated with each other by stream association information. However, the present technology is also applicable to an SVC stream.

The SVC stream contains a video elementary stream of encoded image data of the lowest layer which makes up scalable encoded image data. Moreover, the SVC stream further contains a predetermined number of video elementary streams of encoded image data of the predetermined number of upper layers besides the lowest layer which makes up the scalable encoded image data. By inserting information like the above-described stream association information in the SVC stream, in a receiving side, it is possible to correctly respond to dynamic changes in the SVC stream, i.e., dynamic changes in distribution contents, and to perform a right stream reception.

Although the above-described embodiment has presented an example where a transport stream TS is carried on a broadcast wave for distribution, the present invention may also be applied to a case where the transport stream TS is distributed over a network such as the Internet, and the like. On the other hand, of course, the configuration of the above-described association data is applicable also to a case where data is distributed over the Internet in a container file format other than the transport stream TS.

The present technology can take the following configurations.

(1) An image data transmitting device including: an encoding unit that generates a first elementary stream containing first image data and a predetermined number of second elementary streams that respectively contain a predetermined number of second image data and/or metadata associated with the first image data; and a transmitting unit that transmits a transport stream including each of packets obtained by packetizing each of the elementary streams generated by the encoding unit, the encoding unit inserting stream association information that indicates an association between the elementary streams into at least the first elementary stream.

(2) The image data transmitting device according to item (1), wherein the stream association information contains previous announcement information which announces occurrence of a change in the association between each of the elementary streams before the change actually occurs.

(3) The image data transmitting device according to item (1) or item (2), wherein the encoding unit inserts the stream association information in the elementary stream on pixel basis or GOP basis.

(4) The image data transmitting device according to any one of items (1) through (3), wherein the stream association information indicates the association between each of the elementary streams using identifiers for identifying the respective elementary streams.

(5) The image data transmitting device according to item (4), wherein the transmitting unit inserts a descriptor in the transport stream, the descriptor indicating a correspondence between the identifier of each of the elementary streams and a packet identifier or a component tag of each of the elementary streams.

(6) The image data transmitting device according to any one of items (1) through (5), wherein the transmitting unit inserts a descriptor in the transport stream, the descriptor indicating whether the stream association information has been inserted in the elementary stream or whether there is a change in the stream association information inserted in the elementary stream.

(7) The image data transmitting device according to any one of items (1) through (6), wherein as an encoding system of first image data contained in the first elementary stream and an encoding system of second image data contained in the predetermined number of second elementary streams, an arbitrary combination of encoding systems is allowed.

(8) The image data transmitting device according to any one of items (1) through (7), wherein the first image data is image data of a base view which makes up stereoscopic image data, and the second image data is image data of a view other than the base view which makes up the stereoscopic image data.

(9) The image data transmitting device according to item (8), wherein the first image data is image data for any one of a left eye and a right eye for obtaining stereoscopic image data, and the second image data is image data for the other one of the left eye and the right eye for obtaining the stereoscopic image data.

(10) The image data transmitting device according to any one of item (8) or (9), wherein the metadata is parallax information corresponding to the stereoscopic image data.

(11) The image data transmitting device according to any one of items (8) through (10), wherein the stream association information contains position information indicating, as which view, the view corresponding to the image data contained in the elementary stream in which the stream association information has been inserted is displayed during a stereoscopic display under multi-viewing.

(12) The image data transmitting device according to any one of items (1) through (11), wherein the first image data is encoded image data of a lowest layer which makes up scalable encoded image data, and the second image data is encoded image data of layers other than the lowest layer which makes up the scalable coded image data.

(13) The image data transmitting device according to any one of items (1) through (12), wherein the stream association information further contains control information on output resolutions of the first image data and the second image data.

(14) The image data transmitting device according to any one of items (1) through (13), wherein the stream association information further contains control information which specifies whether each of the predetermined number of second image data is to be necessarily displayed.

(15) An image data transmitting method including: an encoding step of generating a first elementary stream containing first image data and a predetermined number of second elementary streams that respectively contain a predetermined number of second image data and/or metadata associated with the first image data; and a transmitting step of transmitting a transport stream including each of packets obtained by packetizing each of the elementary streams generated in the encoding step, the encoding step inserting stream association information that indicates an association between the respective elementary streams at least into the first elementary stream.

(16) An image data receiving device including: a receiving unit that receives a transport stream containing each of packets obtained by packetizing a first elementary stream, which contains first image data, and a predetermined number of second elementary streams, which respectively contain a predetermined number of second image data and/or metadata associated with the first image data, at least the first elementary stream containing stream association information indicating an association between each of the elementary streams; and a data acquiring unit that, based on the stream association information, acquires the first image data from the first elementary stream received by the receiving unit, and the second image data and/or metadata associated with the first image data from the predetermined number of second elementary streams received by the receiving unit.

(17) The image data receiving device according to item (16), further including a resolution adjuster that adjusts and outputs resolutions of the first image data and the second image data acquired by the data acquiring unit, wherein the stream association information contains control information on the output resolutions of the first image data and the second image data, and the resolution adjuster adjusts resolutions of the first image data and the second image data based on the control information on the output resolutions.

(18) The image data receiving device according to item (16) or (17), further including an image display state selecting unit that selects an image display state based on the first image data and the second image data acquired by the data acquiring unit, wherein the stream association information contains control information which specifies whether each of the predetermined number of second image data is to be necessarily displayed, and the image display state selecting unit restricts selection of the image display state based on the control information.

(19) The image data receiving device according to any one of items (16) to (18), wherein the metadata acquired by the data acquiring unit is parallax information corresponding to the stereoscopic image data, and the image data receiving device further includes a post processing unit that performs an interpolation process on the first image data and the second image data acquired by the data acquiring unit using the parallax information to obtain display image data of a predetermined number of views.

(20) An image data receiving method including: a receiving step of receiving a transport stream containing each of packets obtained by packetizing a first elementary stream, which contains first image data, and a predetermined number of second elementary streams, which respectively contain a predetermined number of second image data and/or metadata associated with the first image data, at least the first elementary stream containing stream association information indicating an association between each of the elementary streams; and a data acquiring step of, based on the stream association information, acquiring the first image data from the first elementary stream received in the receiving step, and the second image data and/or metadata associated with the first image data from the predetermined number of second elementary streams received in the receiving step.

REFERENCE SIGNS LIST

| 10 | Image transmitting and receiving system |
| 100 | Broadcasting station |
| 110 | Transmission data generating unit |
| 111 | Data extracting unit |
| 111a | Data recording medium |
| 112 | Video encoder |
| 113 | Parallax information encoder |
| 114 | Audio encoder |
| 115 | Graphics generating unit |
| 116 | Graphics encoder |
| 117 | Multiplexer |
| 200, 200A | Receiver |
| 201 | CPU |
| 212 | Digital tuner |
| 213 | Transport stream buffer (TS buffer) |
| 214 | Multiplexer |
| 215 | Video decoder |
| 216, 216-1 to 216- | NView buffer |
| 217, 217-1 to 217- | NVideo superimposing unit |
| 218 | Graphics encoder |
| 219 | Graphics generating unit |
| 220 | Parallax information encoder |
| 221, 221-1 to 221- | NGraphics buffer |
| 222 | Audio decoder |
| 223 | Channel processing unit |
| 224, 224-1 to 224- | NScaler |
| 225 | Metadata buffer |
| 226 | Post processing unit |

**Claims**

1. An image data transmitting device comprising:

   an encoding unit that generates a first elementary stream containing first image data and a predetermined number of second elementary streams that respectively contain a predetermined number of second image data and/or metadata associated with the first image data; and
   a transmitting unit that transmits a transport stream including each of packets obtained by packetizing each of the elementary streams generated by the encoding unit,
   wherein the encoding unit inserts stream association information that indicates an association between the elementary streams into at least the first elementary stream.

2. The image data transmitting device according to claim 1,
   wherein the stream association information contains previous announcement information which announces occurrence of a change in the association between each of the elementary streams before the change actually occurs.

3. The image data transmitting device according to claim 1,
   wherein the encoding unit inserts the stream association information in the elementary stream on pixel basis or GOP basis.

4. The image data transmitting device according to claim 1,
   wherein the stream association information indicates the association between each of the elementary streams using identifiers for identifying the respective elementary streams.

5. The image data transmitting device according to claim 4,
wherein the transmitting unit inserts a descriptor in the transport stream, the descriptor indicating a correspondence between the identifier of each of the elementary streams and a packet identifier or a component tag of each of the elementary streams.

6. The image data transmitting device according to claim 1,
wherein the transmitting unit inserts a descriptor in the transport stream, the descriptor indicating whether the stream association information has been inserted in the elementary stream or whether there is a change in the stream association information inserted in the elementary stream.

7. The image data transmitting device according to claim 1,
wherein as an encoding system of first image data contained in the first elementary stream and an encoding system of second image data contained in the predetermined number of second elementary streams, an arbitrary combination of encoding systems is allowed.

8. The image data transmitting device according to claim 1,
wherein the first image data is image data of a base view which makes up stereoscopic image data, and
the second image data is image data of a view other than the base view which makes up the stereoscopic image data.

9. The image data transmitting device according to claim 8,
wherein the first image data is image data for any one of a left eye and a right eye for obtaining stereoscopic image data, and
the second image data is image data for the other one of the left eye and the right eye for obtaining the stereoscopic image data.

10. The image data transmitting device according to claim 8,
wherein the metadata is parallax information corresponding to the stereoscopic image data.

11. The image data transmitting device according to claim 8,
wherein the stream association information contains position information indicating, as which view, the view corresponding to the image data contained in the elementary stream in which the stream association information has been inserted is displayed during a stereoscopic display under multi-viewing.

12. The image data transmitting device according to claim 1,
wherein the first image data is encoded image data of a lowest layer which makes up scalable encoded image data, and
the second image data is encoded image data of layers other than the lowest layer which makes up the scalable encoded image data.

13. The image data transmitting device according to claim 1,
wherein the stream association information further contains control information on output resolutions of the first image data and the second image data.

14. The image data transmitting device according to claim 1,
wherein the stream association information further contains control information which specifies whether each of the predetermined number of second image data is to be necessarily displayed.

15. An image data transmitting method comprising:

an encoding step of generating a first elementary stream containing first image data and a predetermined number of second elementary streams that respectively contain a predetermined number of second image data and/or metadata associated with the first image data; and
a transmitting step of transmitting a transport stream including each of packets obtained by packetizing each of the elementary streams generated in the encoding step,
wherein the encoding step inserts stream association information that indicates an association between the respective elementary streams at least into the first elementary stream.

**16.** An image data receiving device comprising:

a receiving unit that receives a transport stream containing each of packets obtained by packetizing a first elementary stream, which contains first image data, and a predetermined number of second elementary streams, which respectively contain a predetermined number of second image data and/or metadata associated with the first image data, at least the first elementary stream containing stream association information indicating an association between each of the elementary streams; and
a data acquiring unit that, based on the stream association information, acquires the first image data from the first elementary stream received by the receiving unit, and the second image data and/or metadata associated with the first image data from the predetermined number of second elementary streams received by the receiving unit.

**17.** The image data receiving device according to claim 16, further comprising:

a resolution adjuster that adjusts and outputs resolutions of the first image data and the second image data acquired by the data acquiring unit,
wherein the stream association information contains control information on the output resolutions of the first image data and the second image data, and
the resolution adjuster adjusts resolutions of the first image data and the second image data based on the control information on the output resolutions.

**18.** The image data receiving device according to claim 16, further comprising:

an image display state selecting unit that selects an image display state based on the first image data and the second image data acquired by the data acquiring unit,
wherein the stream association information contains control information which specifies whether each of the predetermined number of second image data is to be necessarily displayed, and
the image display state selecting unit restricts selection of the image display state based on the control information.

**19.** The image data receiving device according to claim 16,
wherein the metadata acquired by the data acquiring unit is parallax information corresponding to the stereoscopic image data, and
the image data receiving device further comprises a post processing unit that performs an interpolation process on the first image data and the second image data acquired by the data acquiring unit using the parallax information to obtain display image data of a predetermined number of views.

**20.** An image data receiving method comprising:

a receiving step of receiving a transport stream containing each of packets obtained by packetizing a first elementary stream, which contains first image data, and a predetermined number of second elementary streams, which respectively contain a predetermined number of second image data and/or metadata associated with the first image data, at least the first elementary stream containing stream association information indicating an association between each of the elementary streams; and
a data acquiring step of, based on the stream association information, acquiring the first image data from the first elementary stream received in the receiving step, and the second image data and/or metadata associated with the first image data from the predetermined number of second elementary streams received in the receiving step.

# FIG. 1

10

| BROADCASTING STATION | ⟹ | RECEIVER |
|---|---|---|

100

200

## FIG. 2

(a) MVC (AVC stream )

PMT
```
|--------(Es loop)
|---+-----stream_type=0x1B
|---+-----PID1
|
|---+-----stream_type=0x20
|---+-----PID2
```

(b) AVC + MPEG2 video MIXTURE

PMT
```
|--------(Es loop)
|---+-----stream_type=0x02
|---+-----PID1
|
|---+-----stream_type=0x1B
|---+-----PID2
```

© MPEG2 video

PMT
```
|--------(Es loop)
|---+-----stream_type=0x02
|---+-----PID1
|
|---+-----stream_type=0x02
|---+-----PID2
```

*FIG. 3*

110

117

| DATA EXTRACTING UNIT | → | VIDEO ENCODER | → | MULTIPLEXER | → TS(TS1/TS2) |

111a

DATA RECORDING MEDIUM

111

112

PARALLAX INFORMATION ENCODER

113

AUDIO ENCODER

114

| GRAPHICS GENERATING UNIT | → | GRAPHICS ENCODER |

115

116

# FIG. 4

Transport Stream Association Mechanism General

Transport Stream

EIT

PMT

Program Descriptor

Video ES loop

Video Elementary PID
- Stream_Type video1

Video Elementary PID
- Stream_Type video2

Graphcs ES loop

Graphcs Elementary PID
- Stream_Type private1

Private ES loop

Disparity Data  Elementary PID
- Stream_Type private2

Audio ES loop

Audio Elementary PID
- Stream_Type audio

Packet header PID

Video PES1

Packet header PID

Video PES2

Packet header PID

Graphcs PES

Packet header PID

Disparity Data  PES

Packet header PID

Audio PES

# FIG. 5

Transport Stream Association Mechanism

# FIG. 6

Syntax of ES_ID descriptor

| Syntax | No. of Bits | Format |
|---|---|---|
| ES_ID descriptor() { | | |
| descriptor_tag | 8 | uimslbf |
| descriptor_length | 8 | uimslbf |
| reserved | 4 | '1111' |
| stream_count_for_association | 4 | uimslbf |
| for( i = 0; i< stream_count_for_association; i++){ | | |
| stream_Association_ID | 4 | bslbf |
| reserved | 7 | '1111111' |
| Associated_stream_Elementary_PID | 13 | uimslbf |
| } | | |
| } | | |

# FIG. 7

Syntax of ES_association descriptor

(a)

| Syntax | No. of Bits | Format |
|---|---|---|
| ES_association descriptor() { | | |
| descriptor_tag | 8 | uimslbf |
| descriptor_length | 8 | uimslbf |
| reserved | 7 | '1111111' |
| existence_of_stream_association_info | 1 | bslbf |
| } | | |

(b)

existence_of_stream_association_info    (1bit)

INDICATING WHETHER stream_association information EXISTS IN ES

'1'    stream_association information EXISTS IN ES OR THERE IS CHANGE IN SITUATIONS

'0'    stream_association information DOES NOT EXIST IN ES OR THERE IS NO CHANGE IN SITUATIONS

## FIG. 8

RELATION BETWEEN ES_association DESCRIPTOR AND ES

ENTIRE TS

AU : Access Unit
GOP : STARTING POSITION OF GOP

# FIG. 9

INSERTION POINT OF STREAM ASSOCIATION INFORMATION (MPEG4-AVC)

ACCESS UNIT OF HEAD OF GOP

(a)

| AU DelImmiter (ONE) | SPS (ONE) | PPS (ONE) | SEIs | Slices(Primary Coded Picture) (ONE OR MORE) | Filler data (ONE) | End of sequence (ONE) |

| Buffering period SEI message (ONE) | Recovery point SEI message (NECESSARY ONLY IN CASE OF open GOP, ONE) | Picture timing SEI message (ONE) | Pan-scan rectangle SEI message (ONE) | Decoded reference Picture marking SEI message (ONE) | Stream Association Information SEI message (ONE) |

ACCESS UNIT OF NON-HEAD OF GOP

(b)

| AU DelImmiter (ONE) | PPS (ONE) | SEIs | Slices(Primary Coded Picture) (ONE OR MORE) | Filler data (ONE) | End of sequence (ONE) |

| Picture timing SEI message (ONE) | Pan-scan rectangle SEI message (ONE) | Decoded reference Picture marking SEI message (ONE) | Stream Association Information SEI message (ONE) |

☐ : NECESSARY

⌐ ⌐ : NOT NECESSARY

34

## FIG. 10

AVC Video SEI Syntax

(a)

| Syntax | No. of Bits | Format |
|---|---|---|
| user_data_unregistered (size) { | | |
|    uuid_iso_iec_11578 | 128 | uimslbf |
|    for( i = 16; i < payloadSize; i++ ) | | |
|       **user_data_payload_byte** | 8 | bslbf |
| } | | |

(b)

| Syntax | No. of Bits | Format |
|---|---|---|
| userdata_for_stream_association( ) { | | |
|    stream_association_id | 16 | uimslbf |
|    stream_association( ) | | |
| } | | |

## FIG. 11

```
user_data() {
        user_data_start_code                                    32
        Stream_Association_identifier                           16
        while( nextbits() != '0000 0000 0000 0000 0000 0001' ) {
                Stream_Association()
        }
        next_start_code()
}
```

## FIG. 12

| Syntax | No. of Bits | Format |
|---|---|---|
| stream_association( ) { | | |
|     stream_association_length | 8 | uimslbf |
|     stream_count_for_association | 4 | bslbf |
|     self_ES_id | 4 | bslbf |
|     indication_of_selected_stream_display | 1 | bslbf |
|     indication_of_other_resolution_master | 1 | bslbf |
|     terminating_current_association_flag | 1 | bslbf |
|     display_position | 4 | bslbf |
|     reserved | 1 | '1' |
|     for( i = 0; i< stream_count_for_association; i++){ | | |
|         assocated_ES_id | 4 | bslbf |
|         display_mandatory_flag | 1 | bslbf |
|         resolution_master_flag | 1 | bslbf |
|         reserved | 2 | '11' |
|     } | | |
| } | | |

# FIG. 13

Semantics of Stream_association

| | | |
|---|---|---|
| stream_association_length | (8bit) | WHOLE BYTE SIZE BEHIND CURRENT FIELD |
| stream_count_for_association | (4bit) | NUMBER OF ASSOCIATED Elementary Streams (0 to 15) |
| self_ES_id | (4bit) | ASSOCIATION IDENTIFICATION NUMBER (SET TO 0 FOR BASIC ES) OF STREAM ITSELF IN WHICH PRESENT ASSOCIATION INFORMATION IS ARRANGED) |
| indication_of_selected_stream_display | (1bit) | FLAG THAT INDICATES EXISTENCE OF ES TO DISPLAY DECODER OUTPUT OTHER THAN PRESENT ES<br>'1': THERE IS ES THAT SHOULD BE NECESSARILY DISPLAYED BESIDES PRESENT ES<br>'0': THERE IS NO ES THAT SHOULD BE NECESSARILY DISPLAYED BESIDES PRESENT ES |
| indication_of_other_resolution_master | (1bit) | ES OTHER THAN PRESENT ES IS DISPLAY STANDARD OF RESOLUTION OR SAMPLING FREQUENCY<br>'1': DIFFERENT ES SERVES AS DISPLAY STANDARD<br>'0': PRESENT ES SERVES AS DISPLAY STANDARD |
| terminating_current_association_flag | (1bit) | INDICATING WHETHER THERE WILL BE CHANGE IN CONFIGURATION OF ES FROM FOLLOWING ACCESS UNIT<br>'1': THERE IS CHANGE FROM FOLLOWING AU<br>'0': FOLLOWING AU IS SAME AS PRESENT AU |
| display_position | (4bit) | INDICATING, AS WHICH VIEW, THE STREAM SHOULD BE DISPLAYED DURING 3D DISPLAY UNDER MULTI-VIEWING |
| associated_ES_id | (4bit) | INDICATING IDENTIFIER OF ASSOCIATED STREAM (0 TO 15). |
| display_mandatory_flag | (1bit) | INDICATING WHETHER ES OF associated_ES_id SHOULD BE NECESSARILY DISPLAYED<br>'1': THE ES SHOULD BE NECESSARILY DISPLAYED<br>'0': THE ES IS NOT NECESSARILY DISPLAYED |
| resolution_master_flag | (1bit) | INDICATING WHETHER IT IS DISPLAY STANDARD OF RESOLUTION OR SAMPLING FREQUENCY OF ES OF associated_ES_id<br>'1': THE ES IS STANDARD OF RESOLUTION<br>'0': THE ES IS NOT STANDARD OF RESOLUTION |

# FIG. 14

MVC (AVC stream )

PMT
```
|---------(Es loop)
|----|-----stream_type=0x1b        Stream_association
|----|-----PID1                         display_position=0
|
|----|-----stream_type=0x20        Stream_association
|----|-----PID2                         display_position=15
```

# FIG. 15

Display Position 0    Display Position 15

# FIG. 16

EXAMPLE OF INSERTION OF indication_of_selected_stream_display

| L (base) | Indication_display = 1 | Indication_display = 1 | Indication_display = 0 |
|---|---|---|---|
| R | Mandatory_flag = 1 | Mandatory_flag = 1 | Mandatory_flag = -- |
| C | Mandatory_flag = 1 | Mandatory_flag = 0 | Mandatory_flag = -- |
| | NECESSARY DISPLAY OF RECEIVER IS L+R+C | NECESSARY DISPLAY OF RECEIVER IS L+R | NECESSARY DISPLAY OF RECEIVER IS L |

## FIG. 17

## FIG. 18

EXAMPLE OF MVC (AVC substreams)                                                    Time

TS

| | tn-1 | tn | tn+1 |

[PID 01]  ES1

1st stream AVC | 1st stream AVC | 1st stream AVC

Stream_Type
=0x1B

Stream_association
Information
in video stream

Self_ES_id = 0
Stream_count_for_association=1
Associated_ES_id=1

Self_ES_id = 0
Stream_count_for_association=0

Self_ES_id = 0
Stream_count_for_association=1
Associated_ES_id=1

2nd stream
MVC

X  X  X

2nd stream
MVC

[PID 11]  ES2

Stream_Type
=0x20

3D                              2D                              3D

## FIG. 19

EXAMPLE OF MPEG2 video

Time

TS

| tn-1 | tn | tn+1 |

[PID 01]  ES1    1st stream (MPEG2 video)   1st stream (MPEG2 video)   1st stream (MPEG2 video)

Stream_Type
=0x02

Stream_association
Information
in video stream

Self_ES_id = 0
Stream_count_for_association=1
Associated_ES_id=1

Self_ES_id = 0
Stream_count_for_association=0

Self_ES_id = 0
Stream_count_for_association=1
Associated_ES_id=1

X  X  X

[PID 11]  ES2    2nd stream (MPEG2 video)                                2nd stream (MPEG2 video)

Stream_Type
=0x02

3D                2D                3D

## FIG. 20

EXAMPLE OF MPEG2 video + AVC                                                          Time

TS

| | tn-1 | tn | tn+1 |
|---|---|---|---|

[PID 01]   ES1

1st stream (MPEG2 video) | 1st stream (MPEG2 video) | 1st stream (MPEG2 video)

Stream_Type
=0x02

Stream_association
Information
in video stream

Self_ES_id = 0
Stream_count_for_association=1
Associated_ES_id=1

Self_ES_id = 0
Stream_count_for_association=0

Self_ES_id = 0
Stream_count_for_association=1
Associated_ES_id=1

X  X  X

2nd stream (AVC)

[PID 11]   ES2

Stream_Type
=0x1B

2nd stream (AVC)

3D                        2D                        3D

44

## FIG. 21

EXAMPLE OF MVC (AVC substreams) THAT
SPECIFIES RESTRICTION OF DISPLAY

Time →

**TS**

| tn-1 | tn | tn+1 |

**[PID 01] ES1**

1st stream AVC | 1st stream AVC | 1st stream AVC

**Stream_Type =0x1B**

Stream_association
Information
in video stream

Self_ES_id = 0
Stream_count_for_association=1
Selected_display=1

Self_ES_id = 0
Stream_count_for_association=1
Selected_display=0

Self_ES_id = 0
Stream_count_for_association=1
Selected_display=1

Associated_ES_id=1
display_mandatory_flag=1

Associated_ES_id=1
display_mandatory_flag=0

Associated_ES_id=1
display_mandatory_flag=1

2nd stream
MVC

2nd stream
MVC

2nd stream
MVC

**[PID 11] ES2**

**Stream_Type =0x20**

DISPLAY OF ONLY
3D IS PERMITTED

DISPLAY OF 2D IS
ALSO PERMITTED

DISPLAY OF ONLY
3D IS PERMITTED

## FIG. 22

EXAMPLE OF MVC (AVC substreams)

Time

TS

**[PID 01]  ES1**
Stream_Type
=0x1B

tn-1

1st stream AVC

tn

1st stream AVC

tn+1

1st stream AVC

Stream_association
Information
in video stream

Self_ES_id = 0
Stream_count_for_association=1

Associated_ES_id=1
Terminating_flag=0

Terminating_flag=1

Self_ES_id = 0
Stream_count_for_association=0
Terminating_flag=0

Terminating_flag=1

Self_ES_id = 0
Stream_count_for_association=1

Associated_ES_id=1
Terminating_flag=0

**[PID 11]  ES2**
Stream_Type
=0x20

2nd stream
MVC

2nd stream
MVC

3D

2D

3D

## FIG. 23

EXAMPLE OF MVC (AVC substreams)                                                                                    Time

TS

[PID 01] ES1
Stream_Type
=0x1B

| tn-1 | tn | tn+1 |
|---|---|---|
| 1st stream | 1st stream | 1st stream |

Self_ES_id = 0
Stream_count_for_association=2
Selected_display=1
Associated_ES_id=1
display_mandatory_flag=1
Associated_ES_id=2
display_mandatory_flag=1

Self_ES_id = 0
Stream_count_for_association=2
Selected_display=0
Associated_ES_id=1
display_mandatory_flag=0
Associated_ES_id=2
display_mandatory_flag=0

Self_ES_id = 0
Stream_count_for_association=2
Selected_display=1
Associated_ES_id=1
display_mandatory_flag=1
Associated_ES_id=2
display_mandatory_flag=1

[PID 11] ES2
Stream_Type
=0x20

| 2nd stream | 2nd stream | 2nd stream |
|---|---|---|

Self_ES_id = 1
Stream_count_for_association=1
Associated_ES_id=0

Self_ES_id = 1
Stream_count_for_association=1
Associated_ES_id=0

Self_ES_id = 1
Stream_count_for_association=1
Associated_ES_id=0

[PID 21] ES3
Stream_Type
=0x20

| 3rd stream | 3rd stream | 3rd stream |
|---|---|---|

Self_ES_id = 2
Stream_count_for_association=1
Associated_ES_id=0

Self_ES_id = 2
Stream_count_for_association=1
Associated_ES_id=0

Self_ES_id =2
Stream_count_for_association=1
Associated_ES_id=0

47

## FIG. 24

EXAMPLE OF MVC (AVC substreams)

Time →

TS

|← tn-1 →|← tn →|← tn+1 →|

[PID 01]  ES1
Stream_Type
=0x1B

1ˢᵗ stream | 1ˢᵗ stream | 1ˢᵗ stream

Self_ES_id = 0
Stream_count_for_association=2
Selected_display=1
Associated_ES_id=1
display_mandatory_flag=1
Associated_ES_id=2
display_mandatory_flag=1

Self_ES_id = 0
Stream_count_for_association=2
Selected_display=0
Associated_ES_id=1
display_mandatory_flag=0
Associated_ES_id=2
display_mandatory_flag=0

Self_ES_id = 0
Stream_count_for_association=2
Selected_display=1
Associated_ES_id=1
display_mandatory_flag=1
Associated_ES_id=2
display_mandatory_flag=1

[PID 11]  ES2
Stream_Type
=0x20

2ⁿᵈ stream | 2ⁿᵈ stream | 2ⁿᵈ stream

Self_ES_id = 1
Stream_count_for_association=2
Selected_display=1
Associated_ES_id=0
display_mandatory_flag=1
Associated_ES_id=2
display_mandatory_flag=1

Self_ES_id = 1
Stream_count_for_association=2
Selected_display=0
Associated_ES_id=0
display_mandatory_flag=0
Associated_ES_id=2
display_mandatory_flag=0

Self_ES_id = 1
Stream_count_for_association=2
Selected_display=1
Associated_ES_id=1
display_mandatory_flag=1
Associated_ES_id=2
display_mandatory_flag=1

[PID 21]  ES3
Stream_Type
=0x20

3rd stream | 3rd stream | 3rd stream

Self_ES_id = 2
Stream_count_for_association=2
Selected_display=1
Associated_ES_id=0
display_mandatory_flag=1
Associated_ES_id=1
display_mandatory_flag=1

Self_ES_id = 2
Stream_count_for_association=2
Selected_display=0
Associated_ES_id=0
display_mandatory_flag=0
Associated_ES_id=1
display_mandatory_flag=0

Self_ES_id = 2
Stream_count_for_association=2
Selected_display=1
Associated_ES_id=1
display_mandatory_flag=1
Associated_ES_id=1
display_mandatory_flag=1

## FIG. 25

EXAMPLE OF MVC (AVC substreams)                                                                Time

TS

|← tn-1 →|← tn →|← tn+1 →|

[PID 01] ES1
Stream_Type
=0x1B

| 1st stream | 1st stream | 1st stream |

Self_ES_id = 0
Stream_count_for_association=2
Selected_display=1
Associated_ES_id=1
display_mandatory_flag=1
Associated_ES_id=2
display_mandatory_flag=0

Self_ES_id = 0
Stream_count_for_association=2
Selected_display=0
Associated_ES_id=1
display_mandatory_flag=0
Associated_ES_id=2
display_mandatory_flag=0

Self_ES_id = 0
Stream_count_for_association=2
Selected_display=1
Associated_ES_id=1
display_mandatory_flag=1
Associated_ES_id=2
display_mandatory_flag=0

[PID 11] ES2
Stream_Type
=0x20

| 2nd stream | 2nd stream | 2nd stream |

[PID 21] ES3
Stream_Type
=0xAB

| 3rd stream | 3rd stream | 3rd stream |

## FIG. 26

## FIG. 27

ENTIRE TS

Time

| PMT | PMT | PMT | |
|---|---|---|---|
| (ES x 2) | (ES x 1) | (ES x 2) | |

|← PERIOD OF 2 ESs →|← PERIOD OF 1 ES →| PERIOD OF 2 ESs |

ES1

| AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016 |

ES2

| AU 001 | AU 002 | AU 003 | AU 004 | AU 005 | AU 006 | AU 007 | AU 008 | AU 009 | | | | | | AU 015 | AU 016 |

AU : Access Unit

## INTERNATIONAL SEARCH REPORT

| | International application No. |
|---|---|
| | PCT/JP2012/060516 |

A. CLASSIFICATION OF SUBJECT MATTER

*H04N7/173*(2011.01)i, *H04N7/26*(2006.01)i, *H04N13/00*(2006.01)i

According to International Patent Classification (IPC) or to both national classification and IPC

B. FIELDS SEARCHED

Minimum documentation searched (classification system followed by classification symbols)
H04N7/173, H04N7/26, H04N13/00

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2011-66871 A (Sony Corp.), 31 March 2011 (31.03.2011), | 1-11,14-16, 18-20 |
| Y | paragraphs [0067] to [0079], [0081], [0087] to [0098], [0124] to [0143], [0151] to [0164], [0188] to [0199], [0258] to [0274]; fig. 2 to 3, 17 to 19 <br> & US 2011/0043614 A1 & EP 2288170 A2 <br> & CN 101998139 A & KR 10-2011-0020180 A | 12,13,17 |
| Y | Sakae OKUBO, revised 3rd edition, H.264/AVC Kyokasho, 1st edition, Kabushiki Kaisha Impress R&D, 01 January 2009 (01.01.2009), pages 285 to 323 | 12,13,17 |
| A | | 1-11,14-16, 18-20 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 July, 2012 (10.07.12) | 17 July, 2012 (17.07.12) |

| Name and mailing address of the ISA/ <br> Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2012/060516

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2002-125162 A (Kenwood Corp.),<br>26 April 2002 (26.04.2002),<br>paragraphs [0017] to [0040]<br>& US 2004/0101057 A1    & EP 1333668 A1<br>& WO 2002/033965 A1    & DE 1333668 T | 12,13,17<br>1-11,14-16,<br>18-20 |
| A | WO 2004/004350 A1 (Sharp Corp.),<br>08 January 2004 (08.01.2004),<br>all pages; all drawings<br>& US 2005/0248802 A1    & EP 1519582 A1<br>& WO 2004/004350 A1    & AU 2003244156 A<br>& CN 1666525 A | 1-20 |
| A | JP 10-178594 A (Sanyo Electric Co., Ltd.),<br>30 June 1998 (30.06.1998),<br>all pages; all drawings<br>(Family: none) | 1-20 |

Form PCT/ISA/210 (continuation of second sheet) (July 2009)

## REFERENCES CITED IN THE DESCRIPTION

**Non-patent literature cited in the description**

- Draft Errata List with Revision-Marked Corrections for H.264/AVC. *JVT-1050, Thomas Wiegand et. al., Joint Video Team (JVT) of ISO/IEC MPEG & ITU-T VCEG,* 2003
- Joint Draft 4.0 on Multiview Video Coding. *Joint Video Team of ISO/IEC MPEG & ITU-T VCEG, JVT-X209,* July 2007

- **HEIKO SCHWARZ ; DETLEV MARPE ; THOMAS WIEGAND.** Overview of the Scalable Video Coding Extension of the H.264/AVC, Standard. *IEEE TRANSACTIONS ON CIRCUITS AND SYSTEMS FOR VIDEO TECHNOLOGY,* September 2007, vol. 17 (9), 1103-1120